# EUROPEAN PATENT APPLICATION

(11) **EP 2 058 957 A1**
(43) Date of publication of application: **13.05.2009**
(21) Application number: 06796969.1
(22) Date of filing: 29.08.2006
(51) Int. Cl.: H04B 7/26, H04Q 7/38

(54) **COMMUNICATION APPARATUS, TERMINAL, AND RADIO CHANNEL QUALITY CONTROL METHOD**

(71) Applicant: Fujitsu Limited, Kawasaki-shi, Kanagawa 211-8588 (JP)
(72) Inventor: NAKATSUGAWA, Keiichi, Kawasaki-shi Kanagawa 211-8588 (JP)
(74) Representative: Stebbing, Timothy Charles
(86) International application number: PCT/JP2006/316992
(87) International publication number: WO 2008/026256

(57) **Abstract**

The use efficiency of radio resources in the quality management of a radio channel in a wireless communication system is improved. A monitoring unit 2 monitors a quality of a radio channel established between a master station and a terminal device. An identification unit 3 identifies attribute information representing an attribute of the terminal device or an attribute of a connection designated in a communication between the master station and the terminal device. On the basis of both a result of monitoring the quality of the radio channel by the monitoring unit 2 and a result of identifying the attribute information by the identification unit 3, a control unit 4 determines a reporting cycle in which management information is cyclically reported to a communication partner in order to manage the quality of the radio channel.

## Description

### Technical Field

The present invention relates to a technique of wireless communications, and particularly to a technique of quality management of a radio channel in a wireless communication system.

### Background Art

Wireless communication systems are used for transmitting and receiving signals between base stations (master stations) and terminal devices (slave stations). In this type of system, the transmission power and transmission timing are controlled in order to permit the base stations to receive, with a consistent received power, uplink signals, which are transmitted from the terminal devices. Also, the radio field intensities and the quality of the radio channel when the terminal devices receive downlink signals, which are transmitted from the base stations, are reported to the base stations. This controlling and reporting is performed as a widely spread technique.

The purpose of the above transmission power control of the uplink signals is a reduction of interference with communications with other terminal devices and a saving of power consumption through the reduction of the transmission power output from the terminal devices near the base station while increasing the transmission power output from terminal devices distant from the base station in order to increase the radio field intensities of the waves received by the base station. The purpose of the above transmission timing control of the uplink signals is a correction of timing variations caused by propagation delays or the like in the base station. These controls make the quality of the radio channel stable.

In addition, it is important that the radio field intensities of the downlink signals received by the terminal devices and the quality of the radio channel be transmitted to the base station, particularly in the adaptive modulation scheme, by which a modulation scheme is dynamically selected in accordance with the quality of the radio channels. HSDPA (High Speed Downlink Packet Access) and the 802.16 standard (so-called Worldwide Interoperability for Microwave Access (WiMAX)) are representative wireless communication systems that employ the adaptive modulation scheme. The HSDPA is standardized by the 3GPP (3rd Generation Partnership Project), and the 802.16 standard is proposed by the IEEE (Institute of Electrical and Electronic Engineers).

In WiMAX communications, control messages for controlling transmission power and transmission timing or for reporting the quality of the radio channel are transmitted and received using a field called a burst together with the user data in a communication frame. Accordingly, as more terminal devices are simultaneously connected to one base station and information is exchanged between them more frequently, a greater number of resources is used by those control messages in communication frames, resulting in a smaller number of resources that can be used for user data. This situation lowers the throughput and causes delays or the discarding of transmission data, affecting the quality of service (QoS).

According to WiMAX, a ranging procedure is defined as a procedure for controlling transmission power and transmission timing. However, the execution cycle of that control procedure is to be determined by individual system vendors in arbitrary methods. Further, although the procedures for reporting the quality of the radio channel are defined (such as a procedure in which a terminal device reports the quality each time it receives a request from the base station, or a procedure in which a terminal device transmits reports to the base station at constant intervals after a radio channel named CQICH is established), those reporting intervals are to be determined by individual system vendors in arbitrary methods as well.

Some proposals are made for methods of determining the execution cycle and reporting interval described above.

For example, Patent Document 1 discloses a technique of changing a reporting cycle of the quality of the radio channel on the basis of the degree of variation in the quality of the radio channel or the variance thereof.

Patent Document 2 discloses a technique in which an interval for reporting the quality of the radio channel is extended when the quality of the radio channel or the variance thereof has exceeded a threshold value.
Patent Document 1:
   Japanese Patent Application Publication No. 2005-244991
Patent Document 2:
   Japanese Patent Application Publication No. 2004-207839

### Disclosure of the Invention

### Technical Problem

In conventional methods of managing the quality of the radio channel, all terminal devices have been managed in a uniform manner regardless of the attributes of the terminal devices (such as statuses, types of connections, etc.), thus lowering efficiencies.

For example, the 802.16-2004 standard for FWA (Fixed Wireless Access) and the 802.16e standard for mobile communications can both be used for communications based on WiMAX. Also, actual WiMAX systems cover both fixed terminal devices based on FWA and mobile terminal devices at the same time. As a general principle, fixed terminal devices are considered to be more stable in regard to radio channel quality than mobile terminal devices. When the quality of each radio channel is managed uniformly in communications among both fixed terminal devices and mobile terminal devices, control messages for fixed terminal devices have to be more redundant than those for mobile terminal devices, which may waste radio resources.

Also, the WiMAX standard supports QoS and defines scheduling types UGS (Unsolicited Grant Service), ertPS (extended real-time Poling Service), rtPS (real-time Poling Service), nrtPS (non real-time Poling Service), BE (Best Effort), etc. (this group of scheduling types is referred to as "QoS class" hereinafter) . The UGS class, which gives a high priority to communication, provides communications in which necessary bandwidth and delays at a level lower than the tolerated level are secured, while BE, which gives a low priority to communication, does not secure the above described communication quality, and instead performs communications only when there are available radio resources.

When the quality of each radio channel of all terminal devices is managed uniformly regardless of the fact that different QoS classes are used for respective connections for terminal devices, control messages for connections based on the low-priority QoS classes become more redundant than those for connections based on the high-priority QoS classes. Consequently, only a smaller number of radio resources can be used for the high-priority QoS classes, which have to secure the communication quality. This situation may prevent the securing of the communication quality.

The present invention has been achieved in view of the above problems, and it is an object of the present invention to increase the use efficiency of radio resources in the quality management of a radio channel in a wireless communication system.

### Technical Solution

A master station according to one aspect of the present invention is a master station in a wireless communication system performing wireless communications between the master station and a terminal device, the master station including an identification unit for identifying attribute information representing an attribute of the terminal device or an attribute of a connection designated in a communication with the terminal device; and a control unit for controlling, on the basis of a result of identifying the attribute information, a determination of a reporting cycle in which management information is cyclically reported to the terminal device in order to manage a quality of a radio channel established between the master station and the terminal device. These features solve the above problems.

The above configuration enables reporting of management information at an appropriate frequency, i.e., a frequency according to the above attribute, improving the use efficiency of radio resources.

The master station of the above invention can also be a master station that further includes a monitoring unit for monitoring the quality of the radio channel, in which the control unit further controls determination of the reporting cycle on the basis of a result of monitoring the quality of the radio channel.

The above configuration enables reporting of management information at an appropriate frequency according also to the quality of the radio channel, improving the use efficiency of radio resources.

In the above configuration, the monitoring unit can be configured to monitor, as the quality of the radio channel, at least one of a CQI (Channel Quality Indicator) of the radio channel, an RSSI (Received Signal Strength Indicator) of a signal transmitted from a communication partner with which the radio channel has been established, a precision in timing of receiving the signal, and a received power of the signal, all of which are transmitted from the terminal device.

The above configuration enables reporting of management information at an appropriate frequency according to the quality of the radio channel measured in the terminal device.

Alternatively, the monitoring unit in the above configuration can be configured to monitor, as the quality of the radio channel, at least one of a CQI (Channel Quality Indicator) of the radio channel, an RSSI (Received Signal Strength Indicator) of a signal transmitted from a communication partner with which the radio channel has been established, a precision in timing of receiving the signal, and a received power of the signal, all of which are measured in the master station.

The above configuration enables reporting of management information at an appropriate frequency, i.e., a frequency according to the quality of the radio channel measured in the master station.

The master station in the above invention can be configured to further include an instruction unit for notifying the terminal device of the reporting cycle determined under the control performed by the control unit.

The above configuration can cause the terminal device to report to the master station in a reporting cycle determined by the master station.

Also, the master station in the above invention can be a master station in which the attribute represented by the attribute information is an attribute used for determining whether the terminal device is a fixed terminal device or a mobile terminal device.

The above configuration enables reporting of management information at an appropriate frequency, i.e., a frequency according to whether the terminal device is a fixed terminal or a mobile terminal device.

Also, the master station in the above invention can be a master station in which the attribute represented by the attribute information represents an amount of remaining power in the terminal device.

The above configuration enables reporting of management information at an appropriate frequency, i.e., a frequency according to an amount of remaining power.

Also, the master station in the above invention can be a master station in which the attribute represented by the attribute information represents a priority given to a communication with the terminal device or a priority given to a connection designated for a communication with the terminal device.

The above configuration enables reporting of management information at an appropriate frequency, i.e., a frequency according to the priority given to the communication with the terminal device or the priority given to the connection designated for the communication with the terminal device.

A terminal device according to another aspect of the present invention is a terminal device in a wireless communication system performing wireless communications between a master station and the terminal device, the terminal device including an identification unit for identifying attribute information representing an attribute of the terminal device or an attribute of a connection designated in a communication with the master station; and a control unit for controlling, on the basis of a result of identifying the attribute information, a determination of a reporting cycle in which management information is cyclically reported to the master station in order to manage a quality of a radio channel established between the master station and the terminal device. The features included in this invention solve the above problems.

The above configuration enables reporting of management information at an appropriate frequency, i.e., a frequency according to the above attribute, improving the use efficiency of radio resources.

The terminal device in the above invention can be configured to further include a monitoring unit for monitoring the quality of the radio channel, in which the control unit further controls determination of the reporting cycle on the basis of a result of monitoring the quality of the radio channel.

The above configuration enables reporting of management information at an appropriate frequency according also to the quality of the radio channel, improving the use efficiency of radio resources.

In the above configuration, the monitoring unit can be configured to monitor, as the quality of the radio channel, at least one of a CQI (Channel Quality Indicator) of the radio channel, an RSSI (Received Signal Strength Indicator) of a signal transmitted from a communication partner with which the radio channel has been established, a precision in timing of receiving the signal, and a received power of the signal, all of which are transmitted from the master station.

The above configuration enables reporting of management information at an appropriate frequency, i.e., a frequency according to the quality of the radio channel measured in the master station.

Alternatively, the monitoring unit in the above configuration can be configured to monitor, as the quality of the radio channel, at least one of a CQI (Channel Quality Indicator) of the radio channel, an RSSI (Received Signal Strength Indicator) of a signal transmitted from a communication partner with which the radio channel has been established, a precision in timing of receiving the signal, and a received power of the signal, all of which are measured in the master station.

The above configuration enables reporting of management information at an appropriate frequency, i.e., a frequency according to the quality of the radio channel measured in the master station.

The terminal device in the above invention can be configured to further include an instruction unit for notifying the master station of the reporting cycle determined under the control performed by the control unit.

The above configuration enables reporting of management information from the master station to the terminal device in the reporting cycle determined in the terminal device.

Also, the terminal device in the above invention can be a terminal device in which the attribute represented by the attribute information is an attribute for determining whether the terminal device is a fixed terminal device or a mobile terminal device.

The above configuration enables reporting of management information at an appropriate frequency, i.e., a frequency according to whether the terminal device is a fixed terminal or a mobile terminal device.

Also, the terminal device in the above invention can be a master station in which the attribute represented by the attribute information represents an amount of remaining power in the terminal device.

The above configuration enables reporting of management information at an appropriate frequency, i.e., a frequency according to an amount of remaining power.

Also, the terminal device in the above invention can be a terminal device in which the attribute represented by the attribute information represents a priority given to a communication with the master station or a priority given to a connection designated for a communication with the master station.

The above configuration enables reporting of management information at an appropriate frequency, i.e., a frequency according to the priority given to the communication with the terminal device or the priority given to the connection designated for the communication with the terminal device.

A method of managing a quality of a radio channel according to still another aspect of the present invention is a method of managing a quality of a radio channel established between a master station and a terminal device in a wireless communication system performing wireless communications between the master station and the terminal device, the method including monitoring the quality of the radio channel; identifying attribute information representing an attribute of the terminal device or an attribute of a connection designated in a communication between a master station and a terminal device; and performing, on the basis of both a result of monitoring the quality of the radio channel and a result of identifying the attribute information, determination of a reporting cycle in which management information is cyclically reported to a partner in the communication in order to manage the quality of the radio channel. These features solve the above problems.

The above configuration enables reporting of management information at an appropriate frequency, i.e., a frequency according to the above attribute.

Also, the method in the above invention can be configured to be a method in which the attribute represented by the attribute information is an attribute for determining whether the terminal device is a fixed terminal device or a mobile terminal device; when an identification result indicating that the terminal device is a mobile terminal device is obtained, determination of the reporting cycle is performed so that the reporting cycle is made to be shorter than a reporting cycle that is set when an identification result indicating that the terminal device is a fixed terminal device is obtained; when a monitoring result indicating that a variation in the quality of the radio channel is greater than a prescribed determination threshold value is obtained in a case in which an identification result indicating that the terminal device is a fixed terminal device has been obtained, determination is performed so that the reporting cycle is made shorter; and when a monitoring result indicating that a variation in the quality of the radio channel is smaller than the prescribed determination threshold value is obtained in a case in which an identification result indicating that the terminal device is a mobile terminal has been obtained, determination is performed so that the reporting cycle is made longer.

The above configuration enables reporting of management information at an appropriate frequency, i.e., a frequency according to whether the terminal device is a fixed terminal or a mobile terminal device.

Also, the method in the above invention can be configured to be a method in which the attribute represented by the attribute information represents an amount of remaining power in the terminal device; when the amount of the remaining power in the terminal device identified through the identification of the attribute information is smaller than a prescribed threshold value, determination is performed so that the reporting cycle is made to be longer than a reporting cycle that is set when the amount of the remaining power in the terminal device is greater than the threshold value; when a monitoring result indicating that a variation in the quality of the radio channel is greater than a prescribed determination threshold value is obtained in a case in which the amount of the remaining power in the terminal device identified through the identification of the attribute information is smaller than the threshold value, determination is performed so that the reporting cycle is made shorter; and when a monitoring result indicating that a variation in the quality of the radio channel is smaller than prescribed determination threshold value is obtained in a case in which the amount of the remaining power in the terminal device identified through the identification of the attribute information is greater than the threshold value, determination is performed so that the reporting cycle is made longer.

The above configuration enables reporting of management information at an appropriate frequency, i.e., a frequency according to an amount of remaining power.

Also, the method in the above invention can be configured to be a method in which the attribute represented by the attribute information represents a priority given to a communication with the terminal device or a priority given to a connection designated for a communication with the terminal device; when a priority identified through the identification of the attribute information is higher than a prescribed priority, determination is performed so that the reporting cycle is made to be shorter than a reporting cycle that is set when the priority identified through the identification of the attribute information is lower than the prescribed priority; when a monitoring result indicating that a variation in the quality of the radio channel is greater than a prescribed threshold value is obtained in a case in which the priority identified through the identification of the attribute information is higher than a prescribed priority, determination is performed so that the reporting cycle is made shorter; and when a monitoring result indicating that a variation in the quality of the radio channel is smaller than a prescribed threshold value is obtained, determination is performed so that the reporting cycle is made longer.

The above configuration enables reporting of management information at an appropriate frequency, i.e., a frequency according to the priority given to the communication with the terminal device or the priority given to the connection designated for the communication with the terminal device.

### Advantageous Effects

As described above, the present invention brings about an effect of improving the use efficiency of radio resources in the quality management of a radio channel in a wireless communication system.

### Brief Description of the Drawings

Fig. 1 shows a first fundamental configuration of a communication system implementing the present invention;
Fig. 2A shows a first specific configuration example of the communication system shown in Fig. 1;
Fig. 2B shows a second specific configuration example of the communication system shown in Fig. 1;
Fig. 2C shows a third specific configuration example of the communication system shown in Fig. 1;
Fig. 3 shows a second fundamental configuration of a communication system implementing the present invention;
Fig. 4A shows a first specific configuration example of the communication system shown in Fig. 3;
Fig. 4B shows a second specific configuration example of the communication system shown in Fig. 3;
Fig. 4C shows a third specific configuration example of the communication system shown in Fig. 3;
Fig. 5 is a flowchart for the content of a radio-channel quality reporting-cycle default-value determination process;
Fig. 6A shows a first example of a radio-channel quality reporting-cycle default-value determination process;
Fig. 6B shows a second example of the radio-channel quality reporting-cycle default-value determination process;
Fig. 6C shows a third example of the radio-channel quality reporting-cycle default-value determination process;
Fig. 7 is a flowchart for a first example of a radio-channel quality reporting-cycle changing process;
Fig 8A shows a first example of a reporting-cycle changing determination process;
Fig 8B shows a second example of the reporting-cycle changing determination process;
Fig 8C shows a third example of the reporting-cycle changing determination process;
Fig. 9 is a flowchart for a second example of a radio-channel quality reporting-cycle changing process;
Fig. 10A shows a first example of the procedures for implementing the exchanges of control messages between the master station and the terminal device;
Fig. 10B shows a second example of the procedures for implementing the exchanges of control messages between the master station and the terminal device;
Fig. 10C shows a third example of the procedures for implementing the exchanges of control messages between the master station and the terminal device;
Fig. 10D shows a fourth example of the procedures for implementing the exchanges of control messages between the master station and the terminal device;
Fig. 11 shows a first example of variation in quality of a radio channel established between the master station and the terminal device;
Fig. 12A shows a fifth example of the procedures for implementing the exchanges of control messages between the master station and the terminal device;
Fig. 12B shows a sixth example of the procedures for implementing the exchanges of control messages between the master station and the terminal device;
Fig. 12C shows a seventh example of the procedures for implementing the exchanges of control messages between the master station and the terminal device;
Fig. 12D shows an eighth example of the procedures for implementing the exchanges of control messages between the master station and the terminal device;
Fig. 13 shows a second example of variation in quality of a radio channel established between the master station and the terminal device;
Fig. 14A shows a first example of the procedures for implementing the exchanges of control messages between the master station and the terminal device in communication based on the WiMAX;
Fig. 14B shows a second example of the procedures for implementing the exchanges of control messages between the master station and the terminal device in communication based on the WiMAX;
Fig. 14C shows a third example of the procedures for implementing the exchanges of control messages between the master station and the terminal device in communication based on the WiMAX;
Fig. 14D shows a fourth example of the procedures for implementing the exchanges of control messages between the master station and the terminal device in communication based on the WiMAX;
Fig. 15 shows a Periodic_Ranging message sequence;
Fig. 16A shows a first example of the progress in the Periodic_Ranging message sequence between the master station and the terminal device in communication based on the WiMAX; and
Fig. 16B shows a second example of the progress in the Periodic_Ranging message sequence between the master station and the terminal device in communication based on the WiMAX.

### Explanation of References

1: transmission/reception unit
2: monitoring unit
3: identification unit
4: control unit
5: instruction unit
10: base station
20: control station
30: terminal device

### Best Modes for Carrying Out the Invention

Hereinafter, embodiments of the present invention will be explained by referring to the drawings. In the explanations below, the expression "master station" is used to describe a base station and a control station as communication devices in a communication network in order to clarify the difference between a base station/control station (a master station) and terminal devices (slave stations).

In an example of a wireless communication system that implements the present invention, a master station or a terminal device first identifies attributes of a terminal device or attributes of the connection between a master station and a terminal device. The attributes include information described below.
(1) Information representing whether the terminal device is a fixed terminal device or a mobile terminal device
(2) Information representing an amount of the remaining power in the terminal device
(3) Priority given to the communication with the terminal device and priority given to the connection (QoS class) designated for the communication with the terminal device

When above information (1) is used as the attribute information of a terminal device, the quality management of the radio channel are performed in the manner described below.

Having established a connection with a terminal device, the master station determines a default value for a cycle of reporting the quality of the radio channel. Upon this determination being made, a relatively long reporting cycle (e.g., 1 second) is set as the default value when the connection destination is a fixed terminal device, and a relatively short reporting cycle (e.g., 50 milliseconds) is set as the default value when the connection destination is a mobile terminal device.

Next, in the reporting cycle set as the default value, the master station makes a request cyclically to the terminal device for a report of the radio channel quality information. Thereafter, the master station monitors the degree of variation in the quality of the radio channel on the basis of the measurement results of the quality of the radio channel indicated by the control messages transmitted from the terminal device in response to the requests. An example of a method of monitoring the degree of variation is obtaining a movement average of the measurement result values of past plural times, obtaining a sum of the absolute values of variation amounts, or obtaining a variance of the measurement result values.

When the results of the monitoring indicate that the variation in the quality of the radio channel is small despite the fact that the terminal device 30 is a mobile terminal device, the master station makes the reporting cycle of the quality of the radio channel longer than the default value (e.g., 500 milliseconds). Thereby, the number of control messages reporting the quality of the radio channel is reduced. When the results of the monitoring indicate that the variation in the quality of the radio channel is great despite the fact that the terminal device is a fixed terminal device, the master station makes the reporting cycle of the quality of the radio channel shorter than the default value (e.g., 100 milliseconds). Thereby, the quality of the radio channel can be recognized more accurately, suppressing the increase in communication errors and maintaining the communication quality.

When above information (2) is used as the attribute information of a terminal device, the quality management of a radio channel is performed in a manner described below.

First, the master station determines a default value for a cycle of reporting the quality of the radio channel when, for example, a connection with a terminal device has been established. Upon this determination being made, a relatively long reporting cycle (e.g. , 1 second) is set as the default value when the amount of the remaining power in the connection-destination terminal device is smaller than a prescribed value, and a relatively short cycle (e.g., 50 milliseconds) is set as the default value when that amount of the remaining power is equal to or greater than the prescribed value.

Next, in the reporting cycle set as the default value, the master station cyclically makes a request to the terminal device for a report of the radio channel quality information. Thereafter, the master station monitors the degree of variation in the quality of the radio channel in the same manner as described above, i.e., on the basis of the measurement results of the quality of the radio channel in the control messages transmitted from the terminal device in response to the requests.

When the results of the monitoring indicate that the amount of the remaining power in the connection-destination terminal device is equal to or greater than the prescribed value and the variation in the quality of the radio channel is small, the master station makes the reporting cycle of the quality of the radio channel longer than the default value (e.g., 500 milliseconds). Thereby, the number of control messages reporting the quality of the radio channel and the power consumption in the terminal device are reduced, permitting the terminal device to be used continuously for a longer time. When the results of the monitoring indicate that the amount of the remaining power in the connection-destination terminal device is smaller than the prescribed value and the variation in the quality of the radio channel is great, the master station makes the reporting cycle of the quality of the radio channel shorter than the default value (e.g., 100 milliseconds). Thereby, the quality of the radio channel can be recognized more accurately, suppressing the increase in communication errors and maintaining the communication quality. Although this configuration causes the terminal device to use more power, the communication quality is maintained at a high level so that operations that needlessly consume power such as the retransmission of data caused by communication errors are suppressed, improving the throughput under actual use conditions.

When above information (3) is used as the attribute information of a terminal device, the quality management of a radio channel are performed in a manner described below.

For example, having established a connection with a terminal device, the master station determines a default value for a cycle of reporting the quality of the radio channel. Upon this determination, a relatively long reporting cycle (e.g., 1 second) is set as the default value in a case when a priority given to communication with another terminal device connected to the master station is lower than a prescribed priority or a priority given to a connection with another terminal device connected to the master station is lower than a prescribed priority. A relatively short reporting cycle (e.g., 50 milliseconds) is set as the default value in a case in which those priorities are equal to or higher than the prescribed priority.

Next, in the reporting cycle set as the default value, the master station cyclically makes a request to the terminal device for a report of the radio channel quality information. Thereafter, the master station monitors the degree of variation in the quality of the radio channel in the same manner as described above, i.e., on the basis of the measurement results of the quality of the radio channel in the control messages transmitted from the terminal device in response to the requests.

When the results of the monitoring indicate that the variation in the quality of the radio channel is small, the master station makes the reporting cycle of the quality of the radio channel longer than the default value (e.g., 5 seconds when the communication priority or the connection priority of the terminal device is low, or 500 milliseconds when those priorities are high). Thereby, the number of control messages reporting the quality of the radio channel and the power consumption in the terminal device are reduced, permitting the terminal device to be used continuously for a longer time. When the results of the monitoring indicate that the communication priority or the connection priority in the terminal device is equal to or higher than the prescribed priority and also that the variation in the quality of the radio channel is great, the master station makes the reporting cycle of the quality of the radio channel shorter than the default value (e.g., 10 milliseconds). Thereby, the quality of the radio channel can be recognized more accurately, suppressing the increase in communication errors and maintaining the communication quality.

In addition, the above mentioned example in which a terminal device determines the reporting cycle of the control information used for the radio channel quality management based on the attribute information while the master station does not manage the quality of the radio channel will be explained later.

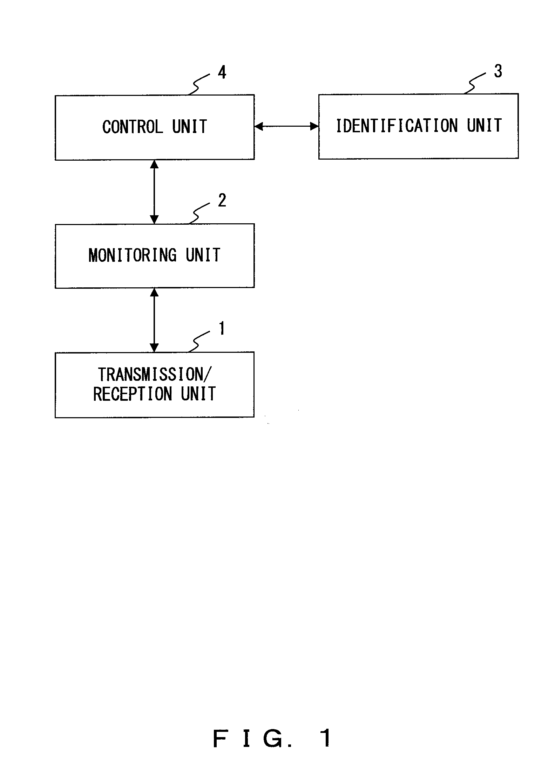

First, Fig. 1 is explained. Fig. 1 shows a fundamental configuration of a communication system implementing the present invention. As shown in Fig. 1, the communication system includes a transmission/reception unit 1, a monitoring unit 2, an identification unit 3, and a control unit 4.

The transmission/reception unit 1 transmits and receives user data and control messages to and from other communication devices via a wireless or wired network. When the system is connected to other apparatuses via a wireless communication network, the transmission/reception unit 1 also measures the quality of radio signals transmitted from other communication devices.

The monitoring unit 2 monitors the degree of variation in quality of the radio channel on the basis of information reporting measurement results of quality of the radio channel or on the basis of measurement results of the quality of radio signals obtained by the transmission/reception unit 1. Examples of a method of monitoring the degree of variation include obtaining a movement average of the measurement result values of past plural times, obtaining a sum of the absolute values of variation amounts, or obtaining a variance of the measurement result values.

The identification unit 3 identifies an attribute of a terminal device or of a connection between a terminal device and the master station on the basis of attribute information accumulated through communications between the terminal device and the master station or on the basis of attribute information exchanged when a connection is established between the terminal device and the master station.

The control unit 4 determines a cycle of reporting the quality of the radio channel on the basis of the degree of variation in quality of the radio channel obtained by the monitoring unit 2 and the attribute information obtained by the identification unit 3. This determination is made in the above described manner.

Additionally, the respective units in the communication system shown in Fig. 1 can be implemented in a communication device in the communication network.

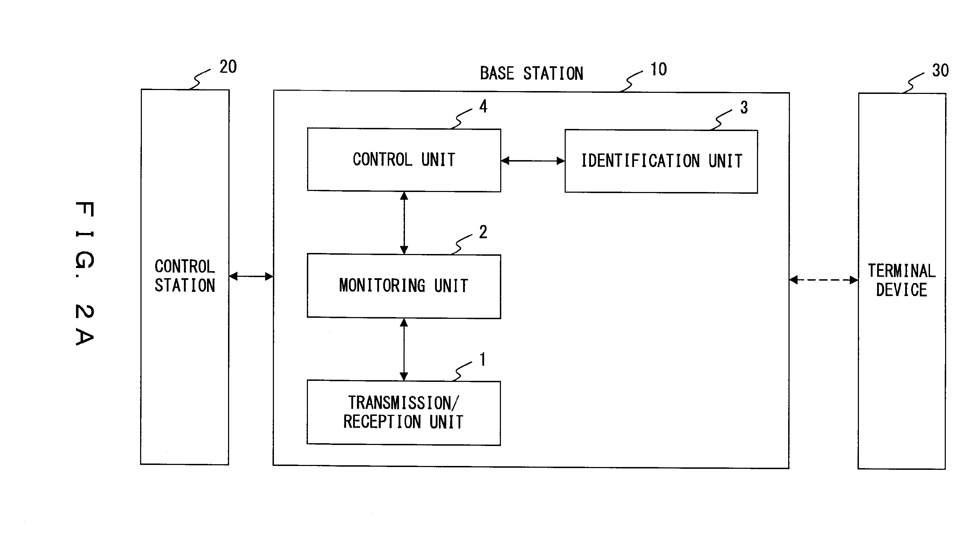

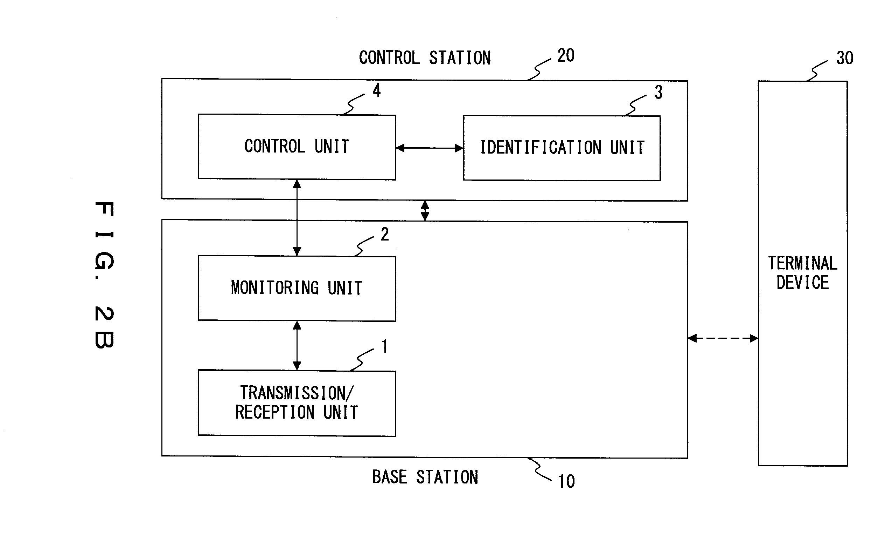

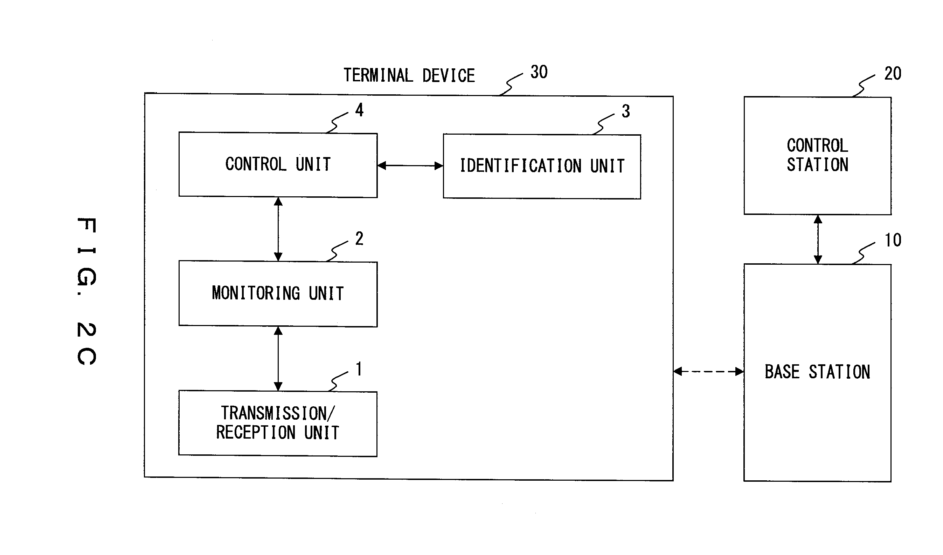

Specific examples of configurations of the system shown in Fig. 1 are shown in Figs. 2A, 2B, and 2C. Each of the communication systems exemplified in these figures includes a base station 10, a control station 20, and a terminal device 30. The control station 20 controls one or more operations (communication with the terminal device 30) of the base station 10 in a lump, and the terminal device 30 transmits and receives signals to and from the base station 10 in a wireless manner. In addition, the base station 10, the control station 20, and the terminal device 30 are communication devices in a communication network.

Fig. 2A shows a configuration example in which all the units in the communication system shown in Fig. 1 are in the base station 10.

Fig. 2B shows a configuration example in which some of the units in the system in Fig. 1 are included in the base station 10, and the other units are included in the control station 20. Specifically, the transmission/reception unit 1 and the monitoring unit 2 are included in the base station 10, and the identification unit 3 and the control unit 4 are included in the control station 20. In this configuration, a single control station 20 can be used as a plurality of base stations 10, and thereby the centralization of the identification unit 3 and the control unit 4 is realized.

Fig. 2C shows a configuration example in which all the units in the system in Fig. 1 are included in the terminal device 30.

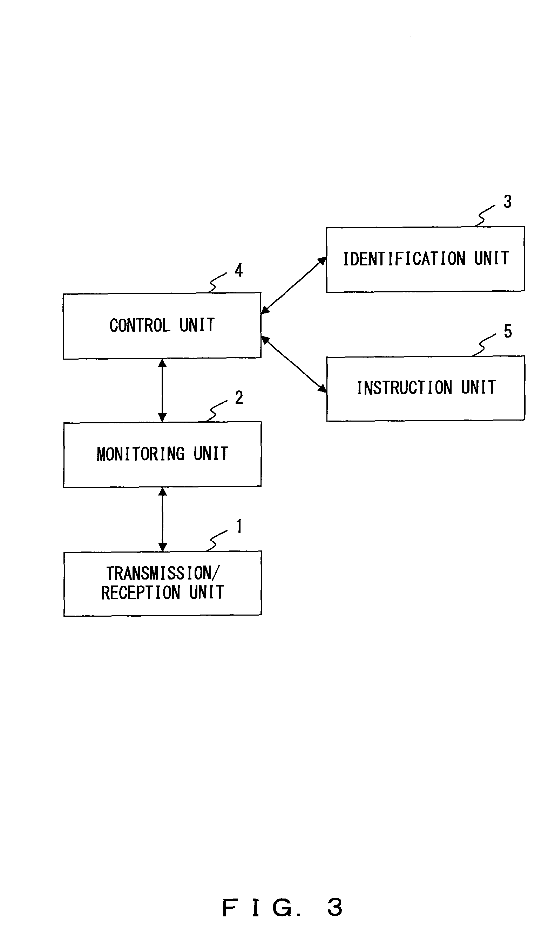

In addition, it is also possible, as shown in Fig. 3, to add an instruction unit 5 to the fundamental configuration of the communication system implementing the present invention shown in Fig. 1.

The instruction unit 5 notifies other communication devices the reporting cycle of the quality of the radio channel determined by the control unit 4.

In addition, the respective units in the communication system shown in Fig. 3 can be included in a communication device in a communication network.

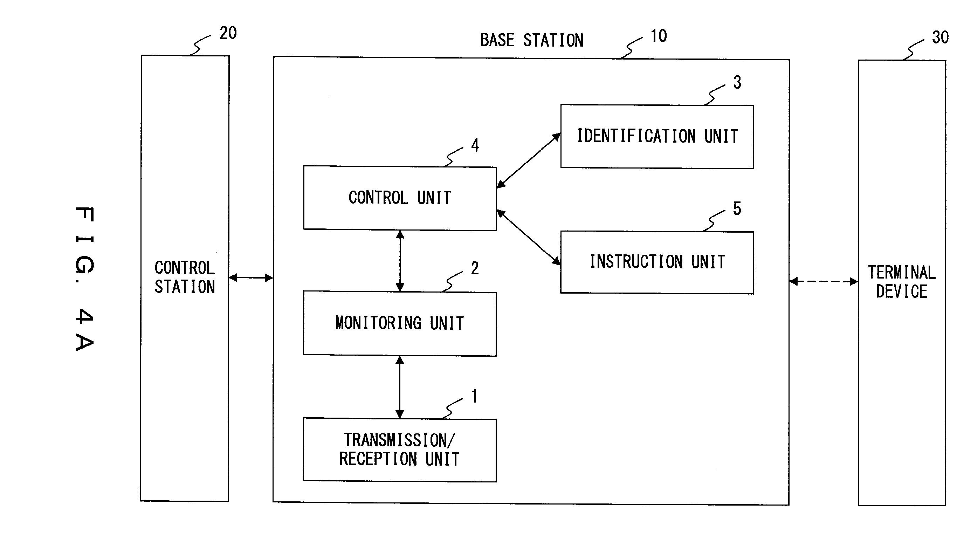

Figs. 4A through 4C show specific examples of configurations of the system shown in Fig. 3. In the communication systems exemplified in these figures, the base station 10, the control station 20, and the terminal device 30 are communication devices in a communication network.

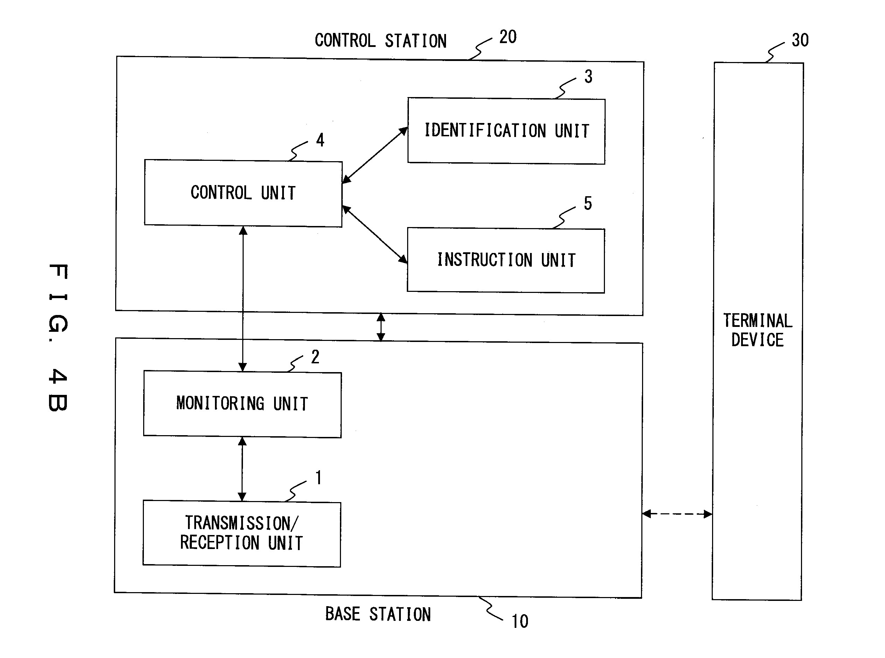

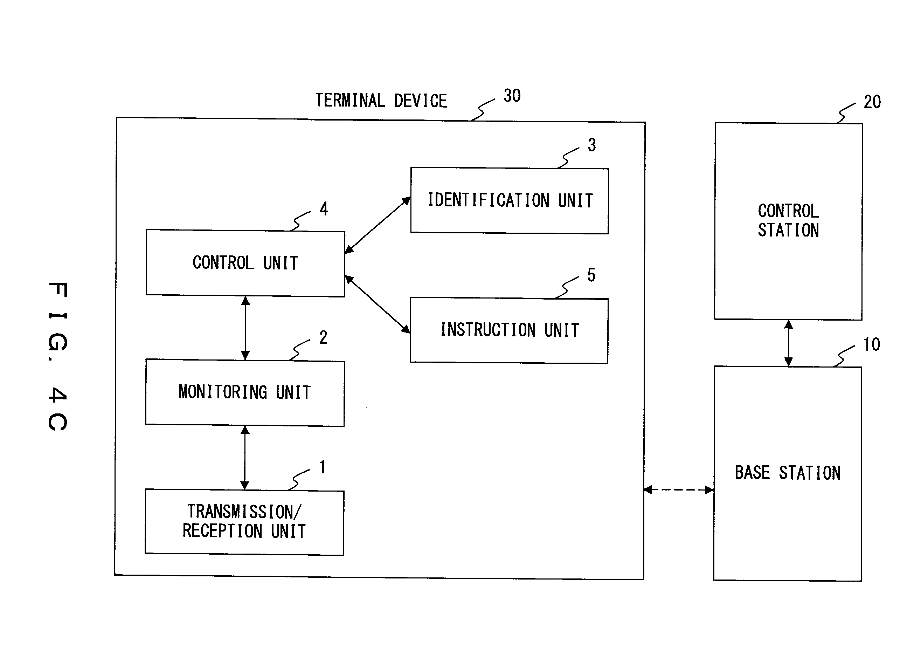

Fig. 4A shows a configuration example in which all the units in the communication system shown in Fig. 3 are included in the base station 10. Fig. 4B shows a configuration example in which some of the units in the communication system shown in Fig. 3 are included in the base station 10, and the other units are included in the control station 20. Fig. 4C shows a configuration example in which all the units in the communication system shown in Fig. 3 are included in the terminal device 30.

Additionally, in the case of Fig. 4C in which a reporting cycle of quality of the radio channel is determined by the control unit 4 in the terminal device 30, the instruction unit 5 in the terminal device 30 transmits information on the reporting cycle to the master station. Receiving this information, the master station requests the terminal device 30 to measure the quality in the reporting cycle included in the received information. In the cases of Fig. 4A and Fig. 4B, information on the reporting cycle determined by the control unit 4 in the master station is transmitted by the instruction unit 5 to the terminal device. Receiving this information, the terminal device autonomously reports quality measurement information in the reporting cycle included in the received information.

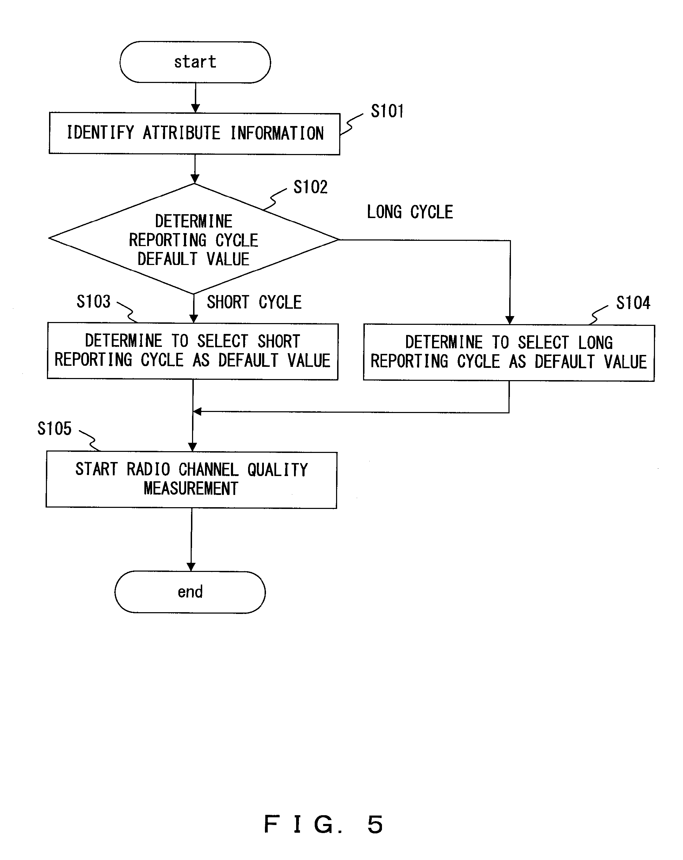

Next, Fig. 5 is explained. Fig. 5 is a flowchart showing steps of a radio-channel quality reporting-cycle default-value determination process executed in the communication system implementing the present invention. This process is executed when a connection is established between the master station and a terminal device in the communication systems shown in Figs. 1, 2A through 2C, 3, and 4A through 4C.

In S101 in Fig. 5, on the basis of the attribute information associated with the terminal device whose connection with the master station has been established, the identification unit 3 identifies the attribute of that terminal device or the attribute of the connection with that terminal.

In S102, the control unit 4 determines which of the reporting cycles, the short cycle or the long cycle, is to be selected as a default value for a reporting cycle of the quality of the radio channel on the basis of the attribute identified by the identification unit 3. Then, the process proceeds to either S103 or S104 depending upon that determination process.

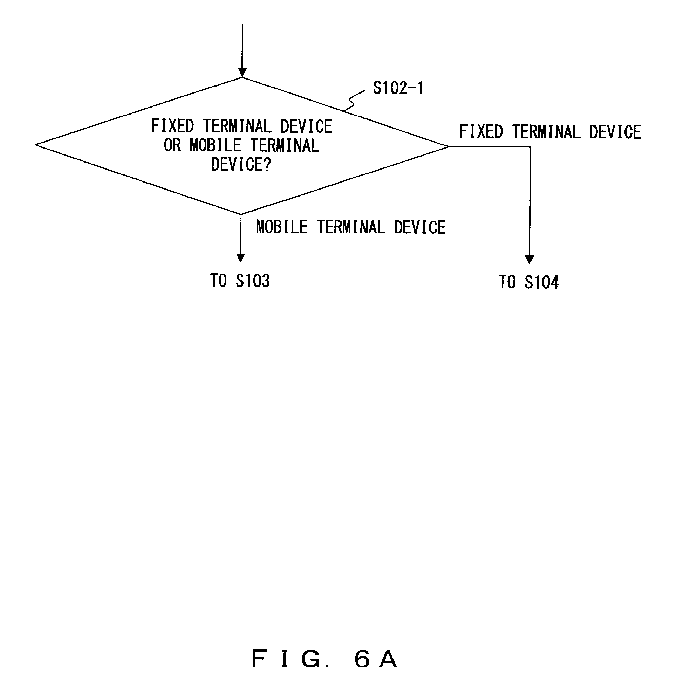

Figs. 6A through 6C show specific examples of the process in S102.

The process executed in S102-1 shown in Fig. 6A determines whether the terminal device that has established a connection with the master station is a fixed terminal device or a mobile terminal device. When that terminal device is a mobile terminal, the process proceeds to S103, and when the terminal device is a fixed terminal, the process proceeds to S104.

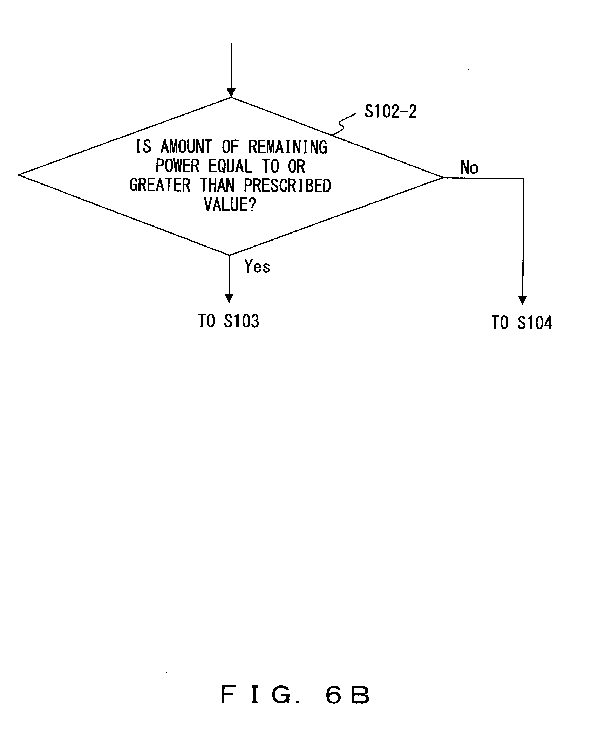

The process in S102-2 shown in Fig. 6B determines whether or not the amount of remaining power in the terminal device that has established a connection with the master station is equal to or greater than a prescribed value. When the amount of remaining power is equal to or greater than the prescribed amount (i.e., when the determination result is Yes), the process proceeds to S103, and when the amount of remaining power is smaller than the prescribed value (i.e., when the determination result is No), the process proceeds to S104.

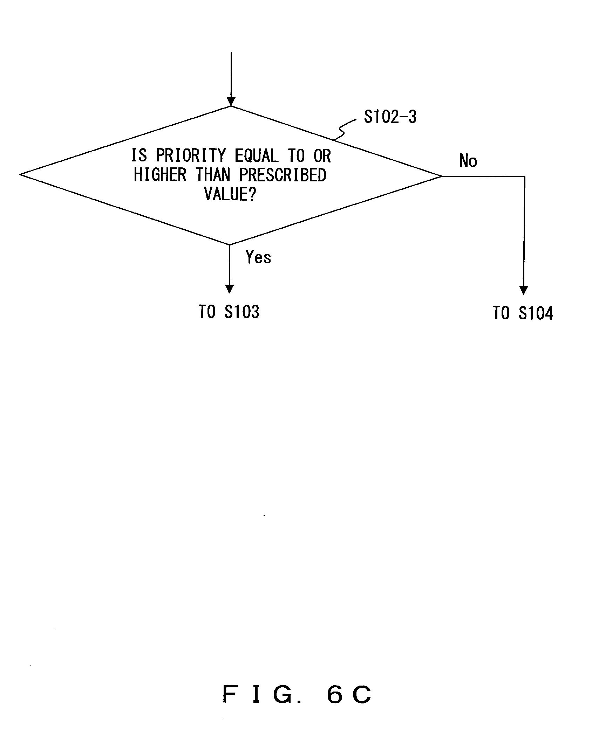

The process in S102-3 shown in Fig. 6C determines whether or not the priority (the priority given to the communication with the terminal device or the priority given to the connection with the terminal device) is equal to or higher than a prescribed value. When the priority is equal to or higher than the prescribed value (i.e., the determination result is Yes), the process proceeds to S103, and when the priority is lower than the prescribed value (i.e., the determination result is No), the process proceeds to S104.

Fig. 5 is again referred to. In S103, the control unit 4 determines that the short reporting cycle will be selected as a default value for the cycle of reporting the quality of the radio channel. Thereafter, the process proceeds to S105.

In S104, the control unit 4 executes a process of determining a default value for the cycle of reporting the quality of the radio channel in a long reporting cycle (a cycle longer than the above short reporting cycle) . Thereafter, the process proceeds to S105.

In S105, the transmission/reception unit 1 starts a radio channel quality measurement process (i.e., the process of measuring and reporting the quality of the radio channel established between the master station and the terminal device) in the reporting cycle determined as the default value. Thereafter, the process in Fig. 5 is terminated.

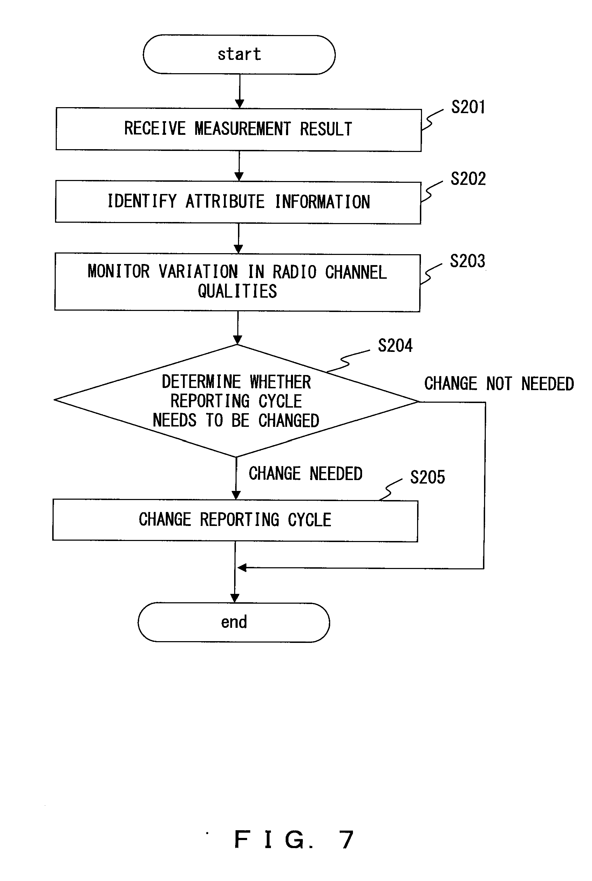

Next, Fig. 7 is explained. Fig. 7 is a flowchart showing a first example of a radio-channel quality reporting-cycle changing process executed in a communication system implementing the present invention. This process starts when the above radio channel quality measurement process starts in the communication systems shown in Figs. 1 and 2A through 2C.

In S201 in Fig. 7, the transmission/reception unit 1 receives the measurement results of the quality of the radio channel. Additionally, in the communication system configured as shown in Fig. 2C, the process of obtaining the measurement results of the quality of the radio channel measured by the transmission/reception unit 1 itself is executed at this timing.

In S202, the identification unit 3 identifies the attribute of the terminal device or the attribute of the connection with the terminal device on the basis of the attribute information associated with the measurement results received by the transmission/reception unit 1.

In S203, the monitoring unit 2 monitors the degree of variation in the quality of the radio channel on the basis of the measurement results received by the transmission/reception unit 1.

In S204, the control unit 4 determines whether or not the cycle of reporting the quality of the radio channel needs to be changed on the basis of the attribute identified by the identification unit 3 and on the basis of the result of the monitoring by the monitoring unit 2 of the degree of variation in the measurement results of the quality of the radio channel. When it is determined that the cycle of reporting the quality of the radio channel needs to be changed, the process proceeds to S205, and the control unit 4 changes the cycle of reporting the quality of the radio channel, and thereafter the process in Fig. 7 is terminated. When it is determined that the cycle of reporting the quality of the radio channel does not need to be changed, the cycle of reporting the quality of the radio channel is not changed and the process shown in Fig. 7 is terminated.

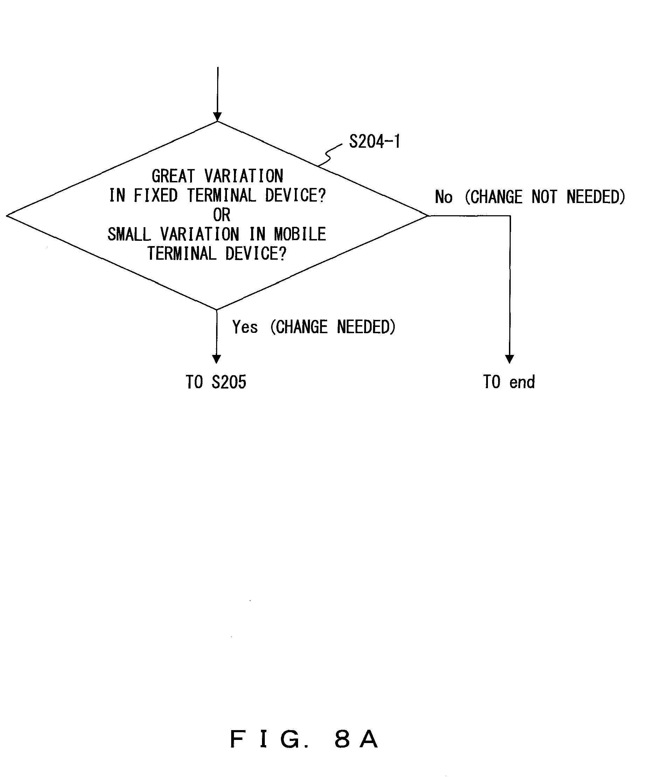

Figs. 8A through 8C show specific examples of the process in S204.

In the process in S204-1 in Fig. 8A, when the terminal device that has established a connection with the master station is a fixed terminal device and also when the degree of variation in the measurement results of the quality of the radio channel is equal to or higher than the prescribed threshold value, it is determined that the cycle of reporting the quality of the radio channel needs to be changed and the process proceeds to S205. In the process in S205, the cycle of reporting the quality of the radio channel is made to be shorter than the default value. When that terminal device is a mobile terminal device and also the degree of variation in the measurement results of the quality of the radio channel is lower than the prescribed threshold value, it is determined that the cycle of reporting the quality of the radio channel needs to be changed, and the process proceeds to S205. However, the cycle of reporting the quality of the radio channel is made to be longer than the default value in S205 in this case. In cases other than the above, it is determined that the cycle of reporting the quality of the radio channel does not need to be changed, and the process in Fig. 7 is terminated.

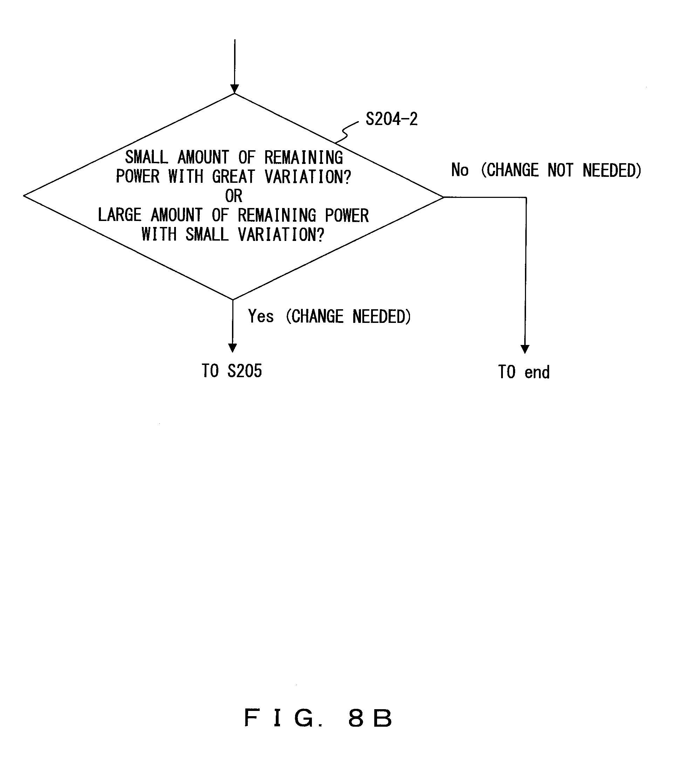

In the process in S204-2 in Fig. 8B, when the amount of remaining power in the terminal device that has established a connection with the master station is smaller than the prescribed threshold value and also when the degree of variation in the measurement results of the quality of the radio channel is equal to or higher than the prescribed threshold value, it is determined that the cycle of reporting the quality of the radio channel needs to be changed, and the process proceeds to S205. In the process in S205 in this case, the cycle of reporting the quality of the radio channel is made to be shorter than the default value. When the amount of remaining power in that terminal device is equal to or greater than the prescribed threshold value and also when the degree of variation in the measurement results of the quality of the radio channel is lower than the prescribed threshold value, it is determined that the cycle of reporting the quality of the radio channel needs to be changed, and the process proceeds to S205. However, in the process in S205 in this case, the cycle of reporting the quality of the radio channel is made to be longer than the default value. In cases other than the above, it is determined that the cycle of reporting the quality of the radio channel does not need to be changed, and the process in Fig. 7 is terminated.

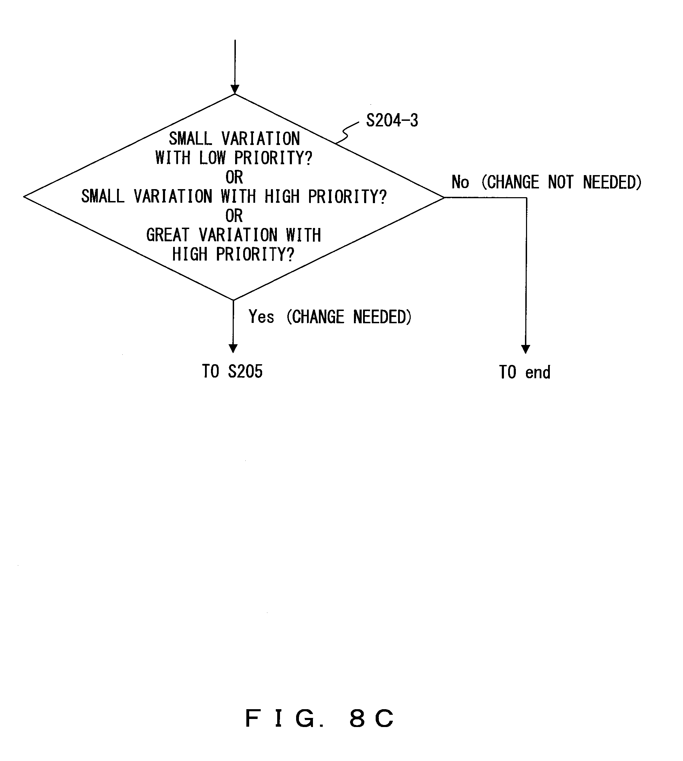

In the process in S204-3 shown in Fig. 8C, when the priority (priority given to the communication with the terminal device or priority given to the connection with the terminal device) is equal to or higher than the prescribed threshold value and also when the degree of variation in the measurement results of the quality of the radio channel is equal to or higher than the prescribed threshold value, it is determined that the cycle of reporting the quality of the radio channel needs to be changed, and the process proceeds to S205. In the process in S205, the cycle of reporting the quality of the radio channel is made to be shorter than the default value. When the degree of variation in the measurement results of the quality of the radio channel is lower than the prescribed threshold value regardless of whether the priority is higher or lower than the threshold value, it is determined that the cycle of reporting the quality of the radio channel needs to be changed, and the process proceeds to S205. In the process in S205 at this time, the cycle of reporting the quality of the radio channel is made to be longer than the default value. In cases other than the above, it is determined that the cycle of reporting the quality of the radio channel dose not need to be changed, and the process in Fig. 7 is terminated.

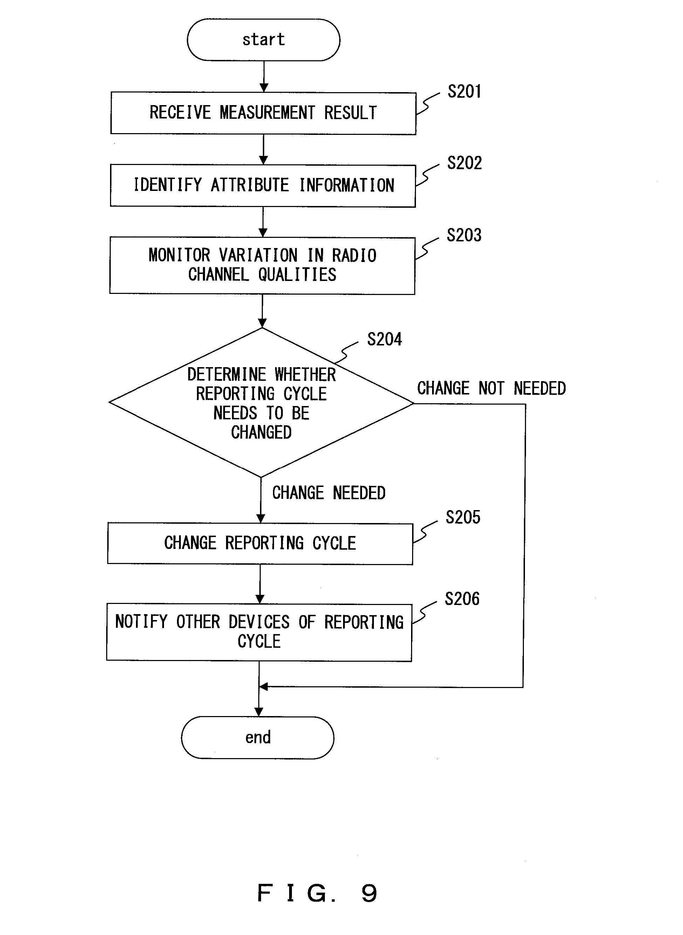

Next, Fig. 9 is explained. Fig. 9 is a flowchart showing a second example of the radio-channel quality reporting-cycle changing process executed in the communication system implementing the present invention. The process starts when the above described radio channel quality measurement process starts in the communication systems shown in Figs. 3 and 4A through 4C.

The second example shown in Fig. 9 is the same as the first example shown in Fig. 7 except that the process in S206 is executed after the execution of S205. In S206, the instruction unit 5 notifies other devices of the reporting cycle that was changed in the process in S205.

Next, explanations will be given for the exchanges of control messages between the master station (the base station 10 and the control station 20) and the terminal device 30 in the communication systems shown in Figs. 2A through 2C and 4A through 4C.

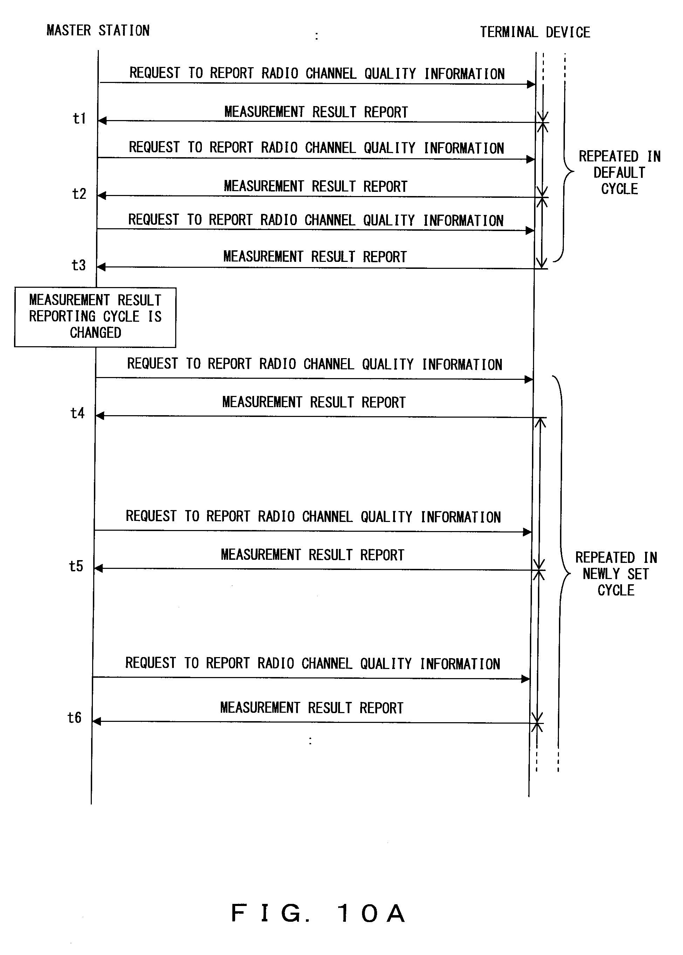

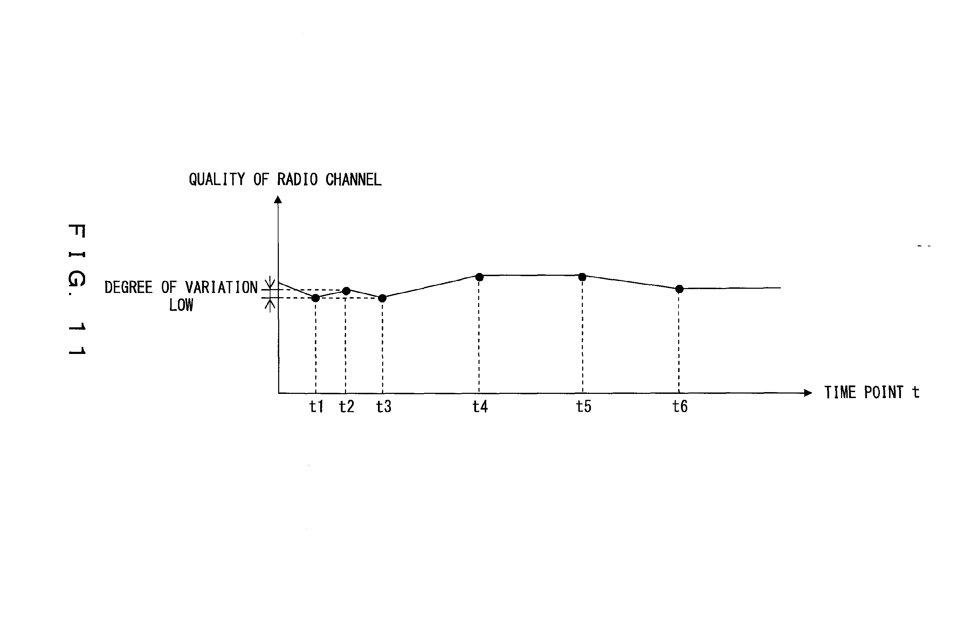

First, Figs. 10A through 10D will be explained. These figures respectively show examples of procedures for implementing the exchanges of the control messages between the master station (the base station 10 and the control station 20) and the terminal device 30. Fig. 11 shows the variation in quality of a radio channel established between the master station and the terminal device 30. The variation shown in Fig. 11 is respectively applied to Figs. 10A through 10D.

A mobile terminal device is used as the terminal device 30 in the examples shown in Figs. 10A through 10D. Accordingly, in these examples, the process in S103 is executed in the radio-channel quality reporting-cycle default-value determination process shown in Fig. 5. As a result of this, the default value for the cycle of reporting the quality of the radio channel is set to be the short reporting cycle.

Fig. 10A shows the procedures for implementing the exchanges of the control messages in the communication systems shown in Figs. 2A and 2B. In the systems shown in Figs. 2A and 2B, the first example of the radio channel quality measurement process shown in Fig. 7 is executed.

In Fig. 10A, after the establishment of the connection between the master station and the terminal device 30, the transmission/reception unit 1 in the master station repeatedly transmits to the terminal device 30 a control message including a request to report radio channel quality information in a short reporting cycle, which is a default value. The terminal device 30 returns control messages including the measurement results of the quality of the radio channel the time it receives the control message, e.g., at time points t1, t2, and t3.

The transmission/reception unit 1 receives the control messages returned from the terminal device 30 in response to the request, and obtains the measurement results of the quality of the radio channel included in the received control messages (S201 in Fig. 7). Additionally, the identification by the identification unit 3 of the attribute information included in the received control message makes it possible to recognize the fact that the terminal device 30 is a mobile terminal device (S202 in Fig. 7).

The monitoring unit 2 in the master station monitors the measurement results of the quality of the radio channel (S203 in Fig. 7). It is assumed that the results of the monitoring at time points t1 through t3 indicate that the degree of variation in the quality of the radio channel (variation in the direction of the vertical axis in Fig. 11) is lower than the threshold value. This fact and the fact that the terminal device 30 is a mobile terminal device cause the control unit 4 to determine that the reporting cycle needs to be changed (the determination result in S204 in Fig. 7 is "change needed") . In this case, the control unit 4 changes the cycle of reporting the quality of the radio channel to a longer cycle (S205 in Fig. 7) .

Thereafter, the transmission/reception unit 1 repeatedly transmits, to the terminal device 30 in the newly set long cycle, a control message including a request to report radio channel quality information. The terminal device 30 returns control messages including the measurement results of the quality of the radio channel each time it receives the control message including the request, e.g., at time points t4, t5, and t6....... Thereby, the quality of the radio channel is reported from the terminal device 30 to the master station in the newly set long reporting cycle.

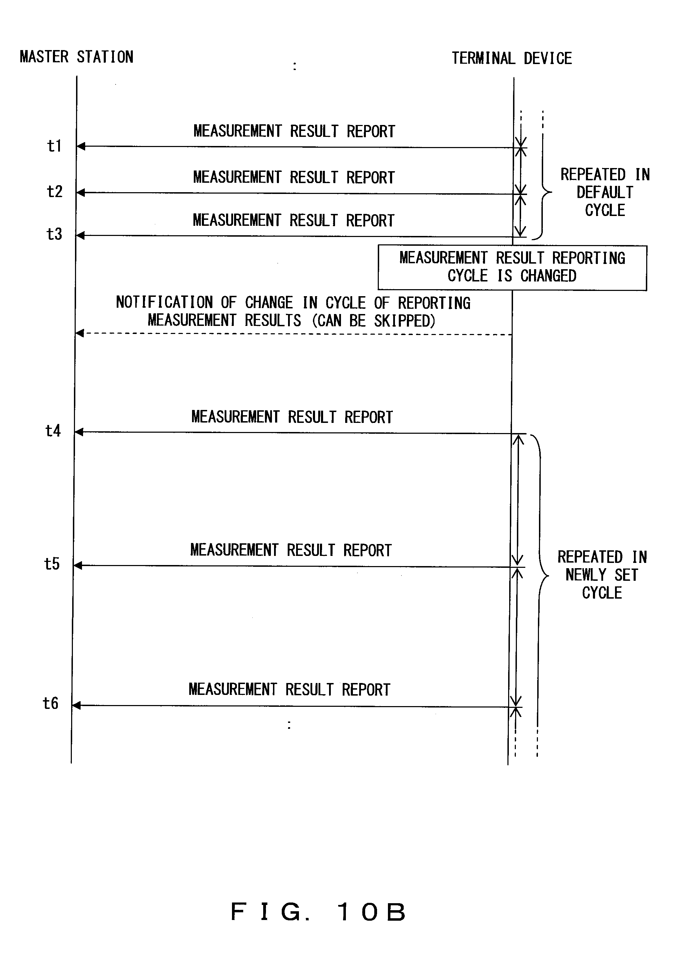

Fig. 10B shows the procedures for implementing the exchanges of the control messages in the communication system shown in Fig. 2C. In this system, the first example of the radio channel quality measurement process shown in Fig. 7 is executed.

In Fig. 10B, after the establishment of the connection between the master station and the terminal device 30, the transmission/reception unit 1 in the terminal device 30 repeatedly measures the quality of the radio channel in a short reporting cycle, which is a default value (S201 in Fig. 7). Thereafter, the terminal device 30 transmits to the master station control messages including those measurement results at time points t1 through t3. The master station receives the control messages in order to obtain the measurement results of the quality of the radio channel. In this example, the control unit 4 can recognize that the terminal device 30 is a mobile terminal device even when the identification unit 3 does not identify the attribute information (S202 in Fig. 7) because the terminal device 30 itself includes the identification unit 3.

The monitoring unit 2 in the terminal device 30 monitors the measurement results of the quality of the radio channel (S203 in Fig. 7). It is assumed that the results of the monitoring at time points t1 through t3 indicate that the degree of variation in the quality of the radio channel (variation in the direction of the vertical axis in Fig. 11) is lower than the threshold value. This fact and the fact that the terminal device 30 is a mobile terminal device cause the control unit 4 to determine that the reporting cycle needs to be changed (the determination result in S204 in Fig. 7 is "change needed") . In this case, the control unit 4 changes the cycle of reporting the quality of the radio channel to a longer cycle (S205 in Fig. 7).

Thereafter, the transmission/reception unit 1 measures the quality of the radio channel in the newly set long cycle and obtains the measurement results, and repeatedly transmits, to the master station in the newly set long cycle, control messages including those measurement results at time points t4 through t6....... Thereby, the quality of the radio channel is reported from the terminal device 30 to the master station in the newly set long reporting cycle.

Additionally, the master station can receive the measurement results of the quality of the radio channel transmitted from the terminal device 30 at any time point, and accordingly it is not essential for the terminal device 30 to notify the master station of the change in the cycle of the reporting of the quality of the radio channel in the example shown in Fig. 10B.

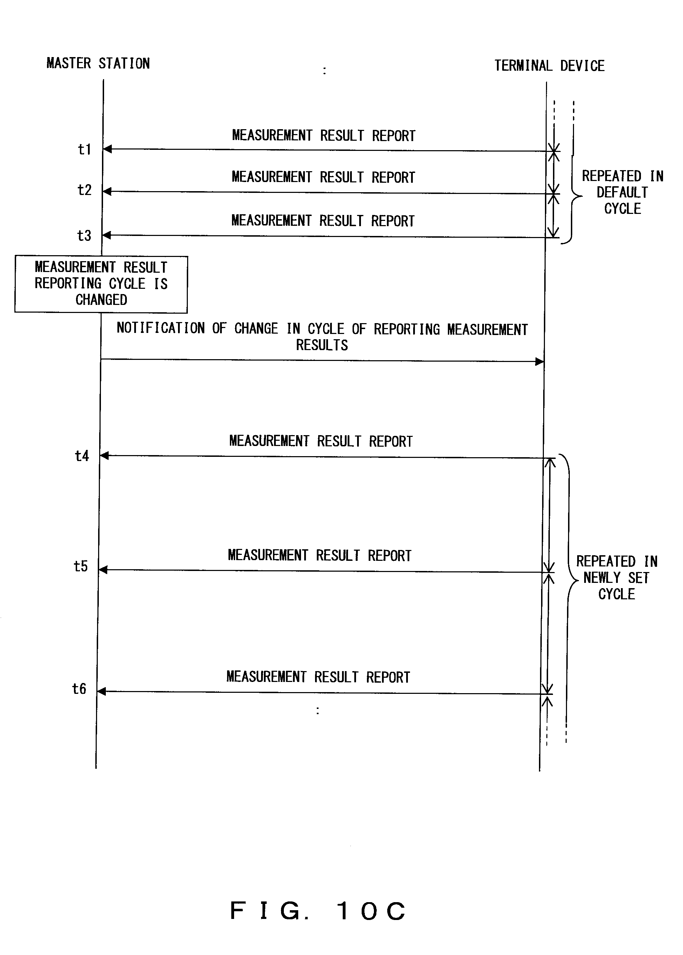

Fig. 10C shows the procedures for implementing the exchanges of the control messages in the communication systems shown in Figs. 4A and 4B. In the communication systems shown in Figs. 4A and 4B, the second example of the radio channel quality measurement process shown in Fig. 9 is executed.

In Fig. 10C, after the establishment of the connection between the master station and the terminal device 30, the terminal device 30 transmits to the master station control messages including the measurement results of the radio channels at time points t1 through t3 in a short reporting cycle, which is a default value. The master station receives these control messages in order to obtain the measurement results of the quality of the radio channel (S201 in Fig. 9) . Additionally, the identification by the identification unit 3 of the attribute information included in the received control messages makes it possible to recognize that the terminal device 30 is a mobile terminal device (S202 in Fig. 9).

The monitoring unit 2 in the master station monitors the measurement results of the quality of the radio channel (S203 in Fig. 9). It is assumed that the results of the monitoring at time points t1 through t3 indicate that the degree of variation in the quality of the radio channel (variation in the direction of the vertical axis in Fig. 11) is lower than the threshold value. This fact and the fact that the terminal device 30 is a mobile terminal device cause the control unit 4 to determine that the reporting cycle needs to be changed (the determination result in S204 in Fig. 9 is "change needed") . In this case, the control unit 4 changes the cycle of reporting the quality of the radio channel to a longer cycle (S205 in Fig. 9). Thereafter, the instruction unit 5 generates a control message including this reporting cycle, and causes the transmission/reception unit 1 to transmit the generated control message to the terminal device 30 (S206 in Fig. 9).

Receiving this control message, the terminal device 30 transmits control messages including the measurement results of the quality of the radio channel to the master station at time points t4, t5, and t6...... in the newly set long reporting cycle included in the control message. Thereby, the quality of the radio channel is reported from the terminal device 30 to the master station in the newly set long reporting cycle.

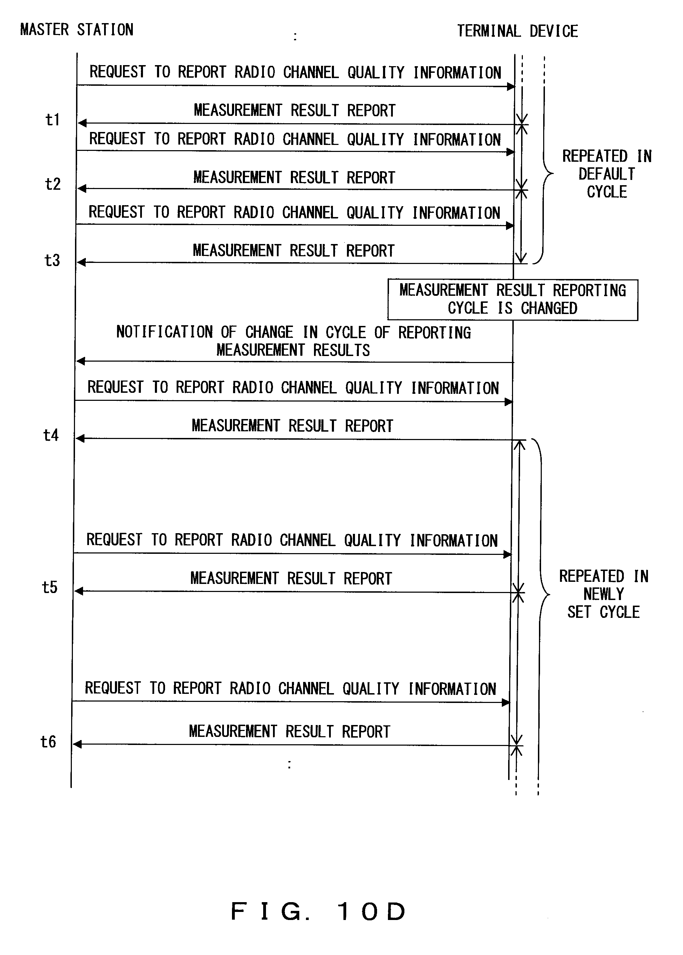

Fig. 10D shows the procedures for implementing the exchanges of the control messages in the communication system shown in Fig. 4C. In the communication system shown in Fig. 4C, the second example of the radio channel quality measurement process shown in Fig. 9 is executed.

In Fig. 10D, after the establishment of the connection between the master station and the terminal device 30, the master station repeatedly transmits to the terminal device 30 a control message including a request to report radio channel quality information in a short reporting cycle, which is a default value. The transmission/reception unit 1 in the terminal device 30 measures the quality of the radio channel each time it receives the control message, and transmits to the master station control messages including the measurement results at time points t1, t2, and t3 (S201 in Fig. 9). The master station receives these control messages in order to obtain the measurement results of the quality of the radio channel. In this example, the control unit 4 can recognize that the terminal device 30 is a mobile terminal device even when the identification unit 3 does not identify the attribute information (S202 in Fig. 9) because the terminal device 30 itself includes the identification unit 3.

The monitoring unit 2 in the terminal device 30 monitors the measurement results of the quality of the radio channel (S203 in Fig. 9). It is assumed that the results of the monitoring at time points t1 through t3 indicate that the degree of variation in the quality of the radio channel (variation in the direction of the vertical axis in Fig. 11) is lower than the threshold value. This fact and the fact that the terminal device 30 is a mobile terminal device cause the control unit 4 to determine that the reporting cycle needs to be changed (the determination result in S204 in Fig. 9 is "change needed") . In this case, the control unit 4 changes the cycle of reporting the quality of the radio channel to a longer cycle (S205 in Fig. 9). Thereafter, the instruction unit 5 generates a control message including this reporting cycle, and causes the transmission/reception unit 1 to transmit the generated control message to the master station (S206 in Fig. 9).

Having received that control message, the master station repeatedly transmits to the terminal device 30 a control message including a request to report radio channel quality information in the newly set long reporting cycle. The transmission/reception unit 1 in the terminal device 30 measures the radio communication quality the time it receives the control message, and transmits to the master station control messages including the results of the measurements at time points t4, t5, and t6....... Thereby, the quality of the radio channel is reported from the terminal device 30 to the master station in the newly set long reporting cycle.

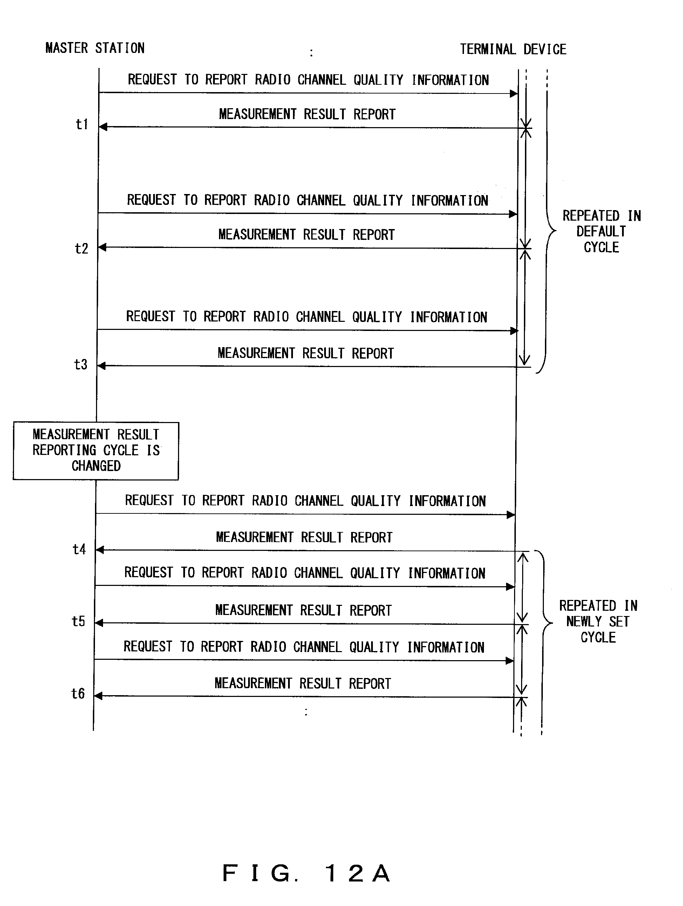

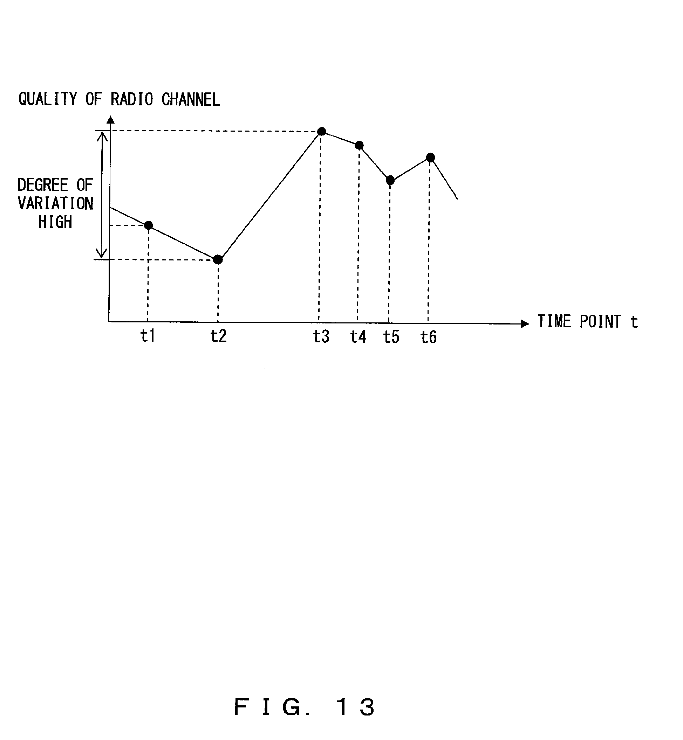

Next, Figs. 12A through 12D will be explained. These figures also show examples of the procedures for implementing the exchanges of control messages between the master station (the base station 10 and the control station 20) and the terminal device 30. Fig. 13 shows variations in the quality of the radio channel in the connection established between the master station and the terminal device 30. The variation shown in Fig. 13 is applied to all of the cases of Figs. 12A through 12D.

In each of Figs. 12A through 12D, it is assumed that a connection of the QoS class, in which the priority is higher than a prescribed priority, has been established. In these examples, the process in S103 is executed in the radio-channel quality reporting-cycle default-value determination process, and accordingly a short reporting cycle is set as a default value for the cycle of reporting the quality of the radio channel.

Fig. 12A shows the procedures for implementing the exchanges of the control messages in the communication systems shown in Figs. 2A and 2B. In these systems, the first example of the radio channel quality measurement process shown in Fig. 7 is executed.

In Fig. 12A, after the establishment of the connection between the master station and the terminal device 30, the master station repeatedly transmits to the terminal device 30 a control message including a request to report radio channel quality information in a long reporting cycle, which is a default value. The terminal device 30 returns control messages including the measurement results of the quality of the radio channel each time it receives the control message, e.g., at time points t1, t2, and t3.

The transmission/reception unit 1 receives the control messages returned from the terminal device 30 in response to the requests, and obtains the measurement results of the quality of the radio channel included in the received control messages (S201 in Fig. 7) . Also, at this time, the attribute information (QoS class in this case) included in the received control messages is identified in order to identify the priority given to the connection established between the terminal device 30 and the master station (S202 in Fig. 7).

The monitoring unit 2 in the master station monitors the measurement results of the quality of the radio channel (S203 in Fig. 7). It is assumed that the results of the monitoring at time points t1 through t3 indicate to the control unit 4 that the degree of variation in the quality of the radio channel (variation in the direction of the vertical axis in Fig. 13) is equal to or higher than the threshold value. It is also assumed that the comparison between the priorities indicate to the control unit 4 that the priority given to the connection established between the master station and the terminal device 30 is equal to or higher than the prescribed priority. These facts cause the control unit 4 to determine that the reporting cycle needs to be changed (the determination result in S204 in Fig. 7 is "change needed"). In this case, the control unit 4 changes the cycle of reporting the quality of the radio channel to a still shorter cycle (S205 in Fig. 7).

Thereafter, the transmission/reception unit 1 repeatedly transmits to the terminal device 30 a control message including a request to report radio channel quality information in the newly set short reporting cycle. The terminal device 30 returns control messages including the measurement results of the quality of the radio channel each time it receives the control message, e.g., at time points t4, t5, and t6....... Thereby, the quality of the radio channel is reported from the terminal device 30 to the master station in the newly set short reporting cycle.

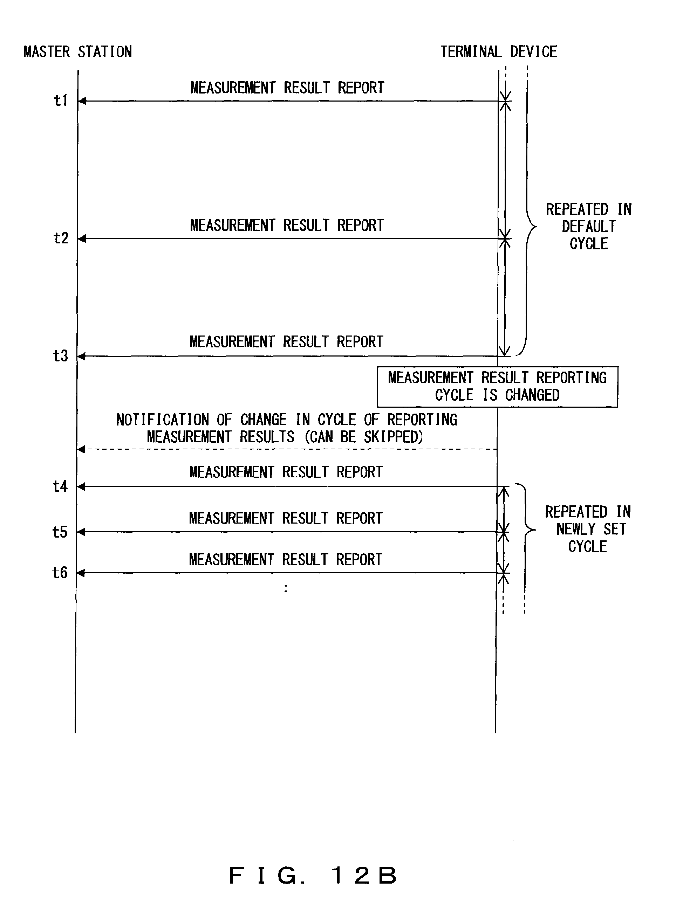

Fig. 12B shows the procedures for implementing the exchanges of the control messages in the communication system shown in Fig. 2C. In this communication system, the first example of the radio channel quality measurement process shown in Fig. 7 is executed.

In Fig. 12B, after the establishment of the connection between the master station and the terminal device 30, the transmission/reception unit 1 in the terminal device 30 repeatedly measures the quality of the radio channel in a long reporting cycle, which is a default value (S201 in Fig. 7). Thereafter, the terminal device 30 transmits to the master station control messages including the measurement results at time points t1 through t3. The master station receives the control messages in order to obtain the measurement results of the quality of the radio channel. Also, at this time, the attribute information (QoS class in this case) included in the received control messages is identified in order to identify the priority given to the connection established between the terminal device 30 and the master station (S202 in Fig. 7).

The monitoring unit 2 in the terminal device 30 monitors the measurement results of the quality of the radio channel (S203 in Fig. 7). It is assumed that the results of the monitoring at time points t1 through t3 indicate that the degree of variation in the quality of the radio channel (variation in the direction of the vertical axis in Fig. 13) is equal to or higher than the threshold value. It is also assumed that the comparison between the priorities indicate to the control unit 4 that the priority given to the connection established between the master station and the terminal device 30 is equal to or higher than the prescribed priority. These facts cause the control unit 4 to determine that the reporting cycle needs to be changed (the determination result in S204 in Fig. 7 is "change needed"). In this case, the control unit 4 changes the cycle of reporting the quality of the radio channel to a still shorter cycle (S205 in Fig. 7).

Thereafter, the transmission/reception unit 1 repeatedly measures the quality of the radio channel in order to obtain the measurement results and transmits to the master station the control messages including those measurement results at time points t4, t5, t6...... in the newly set short reporting cycle. Thereby, the quality of the radio channel is reported from the terminal device 30 to the master station in the newly set short reporting cycle.

Additionally, the master station can receive the measurement results of the quality of the radio channel transmitted from the terminal device 30 at any time point, and accordingly it is not essential for the terminal device 30 to notify the master station of the change in the cycle of the reporting of the quality of the radio channel in the example shown in Fig. 12B.

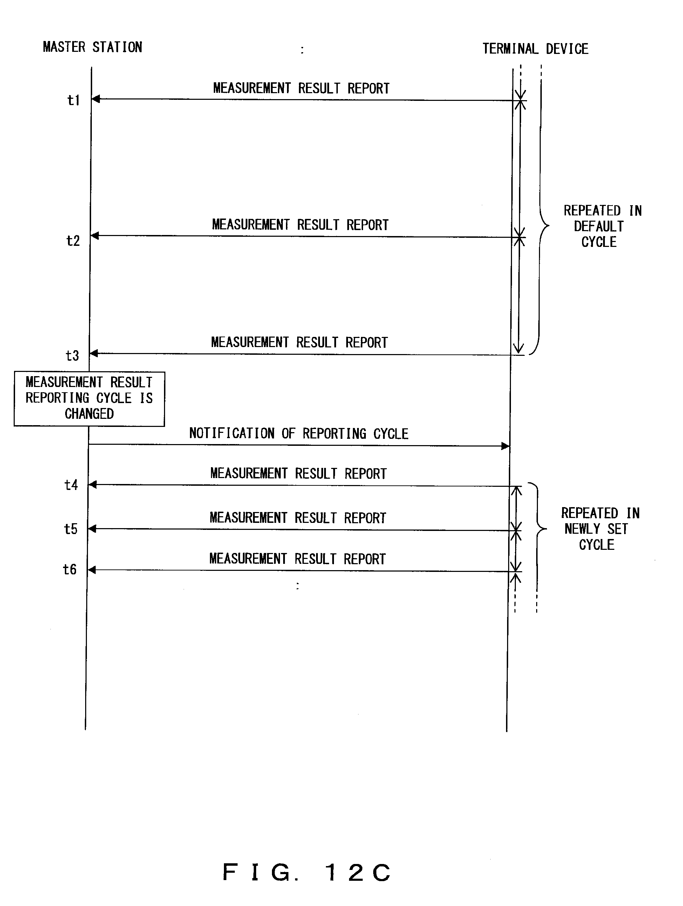

Fig. 12C shows the procedures for implementing the exchanges of the control messages in the communication systems shown in Figs. 4A and 4B. In these systems, the second example of the radio channel quality measurement process shown in Fig. 9 is executed.

In Fig. 12C, after the establishment of the connection between the master station and the terminal device 30, the terminal device 30 transmits to the terminal device 30 the control messages including the measurement results of the quality of the radio channel at time points t1 through t3 in a long reporting cycle, which is a default value. The master station receives these control messages in order to obtain the measurement results of the quality of the radio channel (S201 in Fig. 9). Also, at this time, the identification unit 3 identifies the attribute information (QoS class in this case) included in the received control messages in order to identify the priority given to the connection established between the terminal device 30 and the master station (S202 in Fig. 9).

The monitoring unit 2 in the master station monitors the measurement results of the quality of the radio channel (S203 in Fig. 9). It is assumed that the results of the monitoring at time points t1 through t3 indicate that the degree of variation in the quality of the radio channel (variation in the direction of the vertical axis in Fig. 13) is equal to or higher than the threshold value. It is also assumed that the comparison between the priorities indicates to the control unit 4 that the priority given to the connection established between the master station and the terminal device 30 is equal to or higher than the prescribed priority. These facts cause the control unit 4 to determine that the reporting cycle needs to be changed (the determination result in S204 in Fig. 7 is "change needed"). In this case, the control unit 4 changes the cycle of reporting the quality of the radio channel to a still shorter cycle (S205 in Fig. 9). Thereafter, the instruction unit 5 generates a control message including this reporting cycle, and causes the transmission/reception unit 1 to transmit the generated control message to the terminal device 30 (S206 in Fig. 9).

Having received that control message, the terminal device 30 transmits to the master station the control messages including the measurement results of the quality of the radio channel at time points t4, t5, and t6 in the newly set short reporting cycle. Thereby, the quality of the radio channel is reported from the terminal device 30 to the master station in the newly set short reporting cycle.

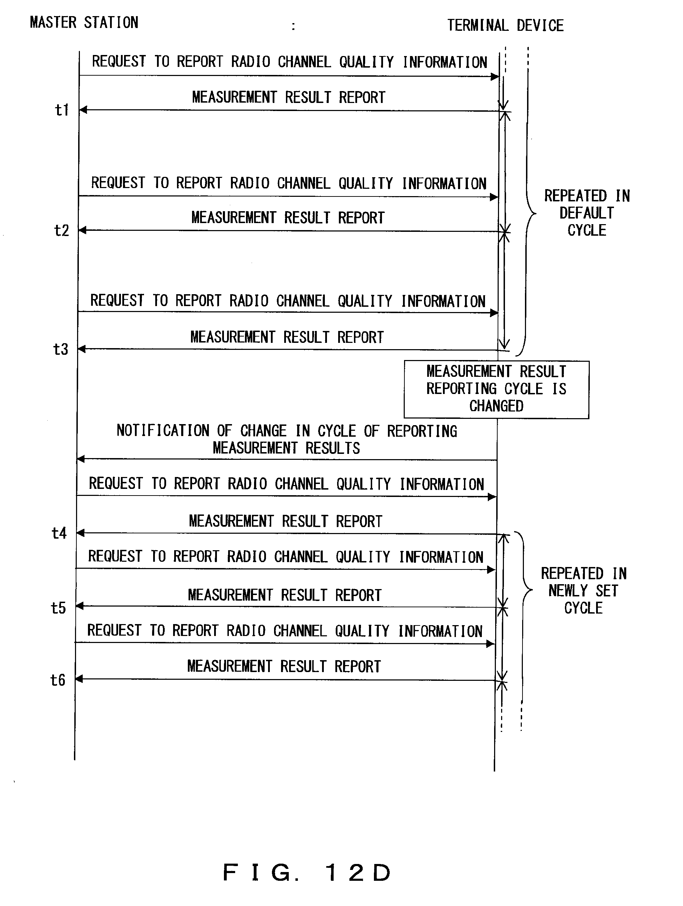

Fig. 12D shows the procedures for implementing the exchanges of the control messages in the communication system shown in Fig. 4C. In this system, the second example of the radio channel quality measurement process shown in Fig. 9 is executed.

In Fig. 12D, after the establishment of the connection between the master station and the terminal device 30, the master station repeatedly transmits to the terminal device 30 a control message including a request to report radio channel quality information in a long reporting cycle, which is a default value. The transmission/reception unit 1 in the terminal device 30 measures the quality of the radio channel each time it receives the control message, and returns to the master station control messages including the measurement results of the quality of the radio channel at time points t1, t2, and t3 (S201 in Fig. 9). The master station receives these control messages in order to obtain the measurement results of the quality of the radio channel. Also, at this time, the identification unit 3 in the terminal device 30 identifies the attribute information (QoS class in this case) included in the received control messages in order to identify the priority given to the connection established between the terminal device 30 and the master station (S202 in Fig. 9).

The monitoring unit 2 in the terminal device 30 monitors the measurement results of the quality of the radio channel (S203 in Fig. 9). It is assumed that the results of the monitoring at time points t1 through t3 indicate that the degree of variation in the quality of the radio channel (variation in the direction of the vertical axis in Fig. 13) is equal to or higher than the threshold value. It is also assumed that the comparison between the priorities indicate to the control unit 4 that the priority given to the connection established between the master station and the terminal device 30 is equal to or higher than the prescribed priority. These facts cause the control unit 4 to determine that the reporting cycle needs to be changed (the determination result in S204 in Fig. 9 is "change needed"). In this case, the control unit 4 changes the cycle of reporting the quality of the radio channel to a still shorter cycle (S205 in Fig. 9). Thereafter, the instruction unit 5 generates a control message including this reporting cycle, and causes the transmission/reception unit 1 to transmit the generated control message to the master station (S206 in Fig. 9).

Having received the control message, the master station repeatedly transmits a control message including a request to report radio channel quality information to the terminal device 30 in the newly set short reporting cycle. The transmission/reception unit 1 in the terminal device 30 measures the quality of the radio channel each time it receives the control message, and returns to the master station control messages including the measurement results of the quality of the radio channel at time points t4, t5, t6....... Thereby, the quality of the radio channel is reported from the terminal device 30 to the master station in the newly set short reporting cycle.

Next, explanations will be given for examples in which the communication systems shown in Figs. 2A through 2C and 4A through 4C adopt WiMAX and the quality of the radio channel is to be managed according to the present invention using the control messages defined by the WiMAX standard.

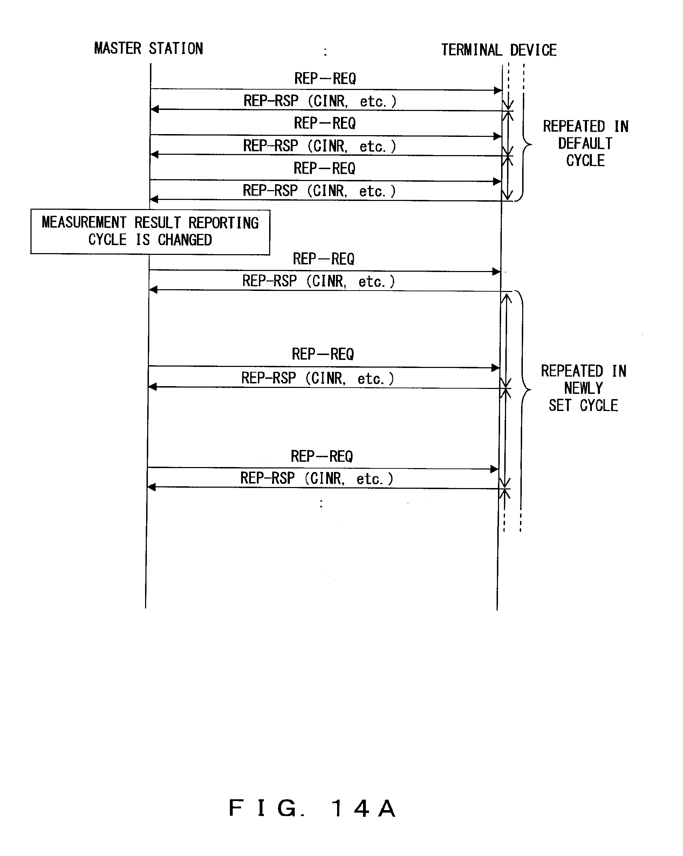

Figs. 14A through 14D will be explained. These figures show the procedures for implementing the exchanges of the control messages between the master station (the base station 10 and the control station 20) and the terminal device 30 performing communications on the basis of the WiMAX standard.

In the examples shown in Figs. 14A through 14D, the terminal device 30 is a mobile terminal device. Accordingly, the process in S103 is executed in the radio-channel quality reporting-cycle default-value determination process shown in Fig. 5 in these examples. As a result of this, a short reporting cycle is set as a default value for a cycle of reporting the quality of the radio channel.

Fig. 14A shows the procedures for implementing the exchanges of the control messages in the communication systems shown in Fig. 2A and 2B. In these systems, the first example of the radio channel quality measurement process shown in Fig. 7 is executed.

In Fig. 14A, after the establishment of the connection between the master station and the terminal device 30, the transmission/reception unit 1 in the master station repeatedly transmits to the terminal device 30 a REP-REQ (Report Request) message in a short reporting cycle, which is a default value. A REP-REQ message is a control message used for making a request for a report containing information on the quality (such as the Channel Quality Indicator (CQI), Received Signal Strength Indicator (RSSI), etc.) of a connection established between the master station and the terminal device 30. The terminal device 30 returns a REP-RES (Report Response) message each time it receives the REP-REQ message. A REP-RES message is a control message transmitted in response to the REP-REQ message, and includes information on the radio channel quality (such as the above mentioned CQI and RSSI, Carrier to Interference and Noise Ratio (CINR), etc) measured in the terminal device 30 and the attribute information (including the fact that the terminal device 30 is a mobile terminal device in this case) of the terminal device 30.

The transmission/reception unit 1 receives the REP-RES message returned from the terminal device 30 in response to the REP-REQ message, and obtains the information on the result of measuring the radio channel quality included in the received REP-RES message (S201 in Fig. 7). Additionally, the identification by the identification unit 3 of the attribute information included in the received REP-RES messages makes it possible to recognize that the terminal device 30 is a mobile terminal device (S202 in Fig. 7).

The monitoring unit 2 in the master station monitors the measurement results of the quality of the radio channel (S203 in Fig. 7). It is assumed that the results of the monitoring up to the current moment indicate that the degree of variation in the quality of the radio channel is lower than the threshold value. This fact and the fact that the terminal device 30 is a mobile terminal device cause the control unit 4 to determine that the reporting cycle needs to be changed (the determination result in S204 in Fig. 7 is "change needed"). In this case, the control unit 4 changes the cycle of reporting the quality of the radio channel to a longer cycle (S205 in Fig. 7).

Thereafter, the transmission/reception unit 1 repeatedly transmits the REP-REQ message to the terminal device 30 in the newly set short reporting cycle. Thereafter, the terminal device 30 returns the REP-RES message each time it receives the REP-REQ message. Thereby, information on the quality of the radio channel (i.e., the REP-RES messages from the terminal device 30) is transmitted from the terminal device 30 to the master station in the newly set long reporting cycle.

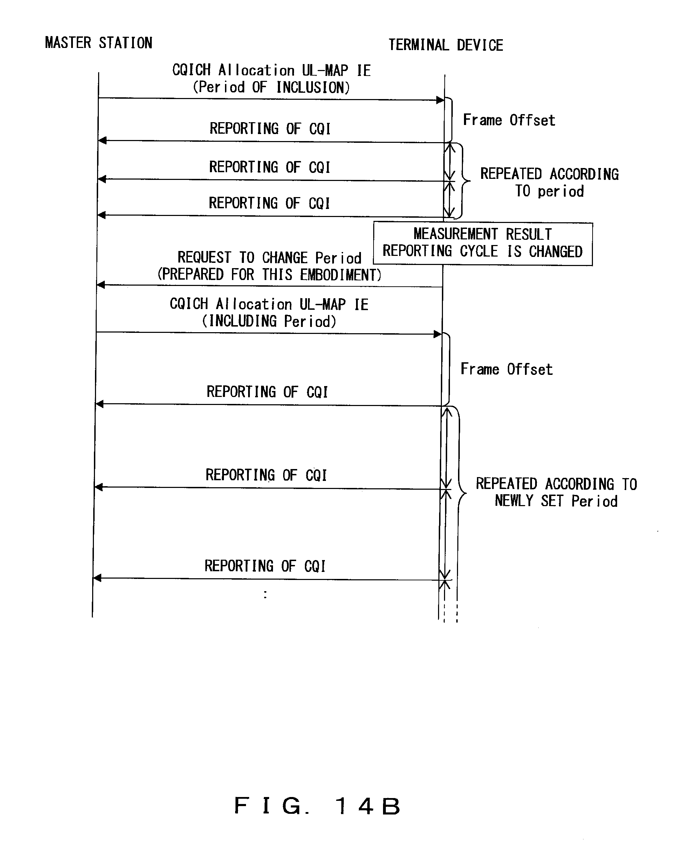

Fig. 14B shows the procedures for implementing the exchanges of the control messages in the communication system shown in Fig. 2C. In this system, the first example of the radio channel quality measurement process shown in Fig. 7 is executed.

In Fig. 14B, after the establishment of the connection between the master station and the terminal device 30, the master station transmits to the terminal device 30 a CQICH_Allocation_UL-MAP_IE (Information Element) message. This message is a control message for establishing a radio channel for conveying CQI information (CQICH) transmitted from the terminal device 30 to the master station. This control message includes various pieces of information such as Period (intervals at which CQI information is reported), Frame_Offset (offset time before the first CQI information is reported after receiving a message), Duration (duration in which CQI information can be reported), and the like. The Period information at this time indicates a short reporting cycle as a default value.

According to the WiMAX standard, sub frames each consisting of a plurality of sub channels and of a plurality of slots are used in uplink communication paths, from the terminal device 30 to the master station. A CQICH_Allocation_UL-MAP_IE message identifies the data transmission path (i.e., CQICH), which the master station has allocated for the sub frame, for reporting CQI information from the terminal device 30 to the master station.

The UL-MAP (Uplink Map) is map information indicating the allocation of a data transmission path for each type of data and for each terminal device for a sub frame. For the above described attribute information (information indicating that the terminal device 30 is a mobile terminal device in this case) for example, another data transmission path for the sub frame is allocated to convey the information to the master station.

The transmission/reception unit 1 in the terminal device 30 that has received the CQICH_Allocation_UL-MAP_IE message repeatedly measures the quality of the radio channel (obtains the CQIs in this case) in a short reporting cycle, which is a default value in order to obtain the results of the measurements (S201 in Fig. 7) . When the time of the Frame_Offset information included in the message has elapsed since that message was received, the measurement results (the CQI information) are repeatedly reported to the master station by using the radio channel (i.e., the CQICH) indicated in the message. This reporting is made at time intervals according to the Period information included in the message.

In this example, the control unit 4 can recognize that the terminal device 30 is a mobile terminal device even when the identification unit 3 does not identify the attribute information (S202 in Fig. 7) because the terminal device 30 itself includes the identification unit 3.

The monitoring unit 2 in the terminal device 30 monitors the measurement results of the quality of the radio channel (S203 in Fig. 7). It is assumed that the results of the monitoring up to the current moment indicate that the degree of variation in the quality of the radio channel is lower than the threshold value. This fact and the fact that the terminal device 30 is a mobile terminal device cause the control unit 4 to determine that the reporting cycle needs to be changed (the determination result in S204 in Fig. 9 is "change needed") . In this case, the control unit 4 changes the cycle of reporting the quality of the radio channel to a longer cycle (S205 in Fig. 7). Thereafter, the control unit 4 causes the transmission/reception unit 1 to transmit a control message that requests a change in the above described Period information. In addition, this control message is not defined by the WiMAX standard, but is prepared for the present embodiment.

Having received this control message, the master station transmits to the terminal device 30 the CQICH_Allocation_UL-MAP_IE message including the Period information that has been changed to the interval designated in the control message. The transmission/reception unit 1 in the terminal device 30, having received this message, repeatedly measures the quality of the radio channel (obtains the CQIs in this case) and transmits the measurement results in the newly set long reporting cycle. When the time of the Frame_Offset information included in the message has elapsed since that message was received, the measurement results (the CQI information) are repeatedly reported to the master station by using the radio channel (i.e., the CQICH) indicated in the message. This reporting is made at longer time intervals according to the Period information included in the message.

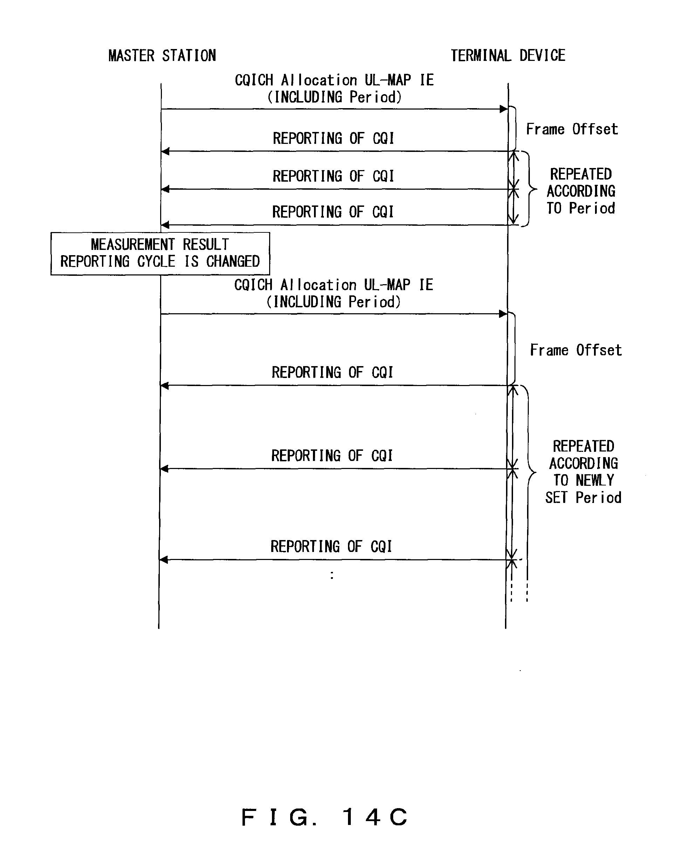

Fig. 14C shows the procedures for implementing the exchanges of the control messages in the communication systems shown in Figs. 4A and 4B. In these systems, the second example of the radio channel quality measurement process shown in Fig. 9 is executed.

In Fig. 14C, after the establishment of the connection between the master station and the terminal device 30, the transmission/reception unit 1 in the master station transmits to the terminal device 30 a CQICH_Allocation_UL-MAP_IE message. The Period information included in this control message at this time indicates a short reporting cycle, which is a default value.

Having received this CQICH_Allocation_UL-MAP_IE message, the terminal device 30 repeatedly measures the quality of the radio channel (obtains the CQIs in this case) in order to obtain the results of the measurements in a short reporting cycle, which is a default value (in accordance with the Period information included in the received massage). When the time of the Frame_Offset information included in the message has elapsed since that message was received, the measurement results (the CQI information) are repeatedly reported to the master station by using the CQICH indicated in the message. This reporting is made at short time intervals according to the Period information included in the message.

The transmission/reception unit 1 in the master station obtains the measurement results of the quality of the radio channel by receiving the CQI information (S201 in Fig. 9). Further, the identification unit 3 in the master station identifies the above described attribute information (information indicating that the terminal device 30 is a mobile terminal device) transmitted in a data transmission path other than the path used for the transmission of the CQICH in the uplink communication path in order to recognize that the terminal device 30 is a mobile terminal device (S202 in Fig. 9).

The monitoring unit 2 in the master station monitors the measurement results of the quality of the radio channel (S203 in Fig. 9). It is assumed that the results of the monitoring up to the current moment indicate that the degree of variation in the quality of the radio channel is lower than the threshold value. This fact and the fact that the terminal device 30 is a mobile terminal device cause the control unit 4 to determine that the reporting cycle needs to be changed (the determination result in S204 in Fig. 9 is "change needed"). In this case, the control unit 4 changes the cycle of reporting the quality of the radio channel to a longer cycle (S205 in Fig. 9). Thereafter, the control unit 4 causes the transmission/reception unit 1 to transmit to the terminal device 30 the CQICH_Allocation_UL-MAP_IE message in which the above described Period information has been changed to a longer interval (S206 in Fig. 9).

Having received this CQICH_Allocation_UL-MAP_IE message, the terminal device 30 repeatedly measures the quality of the radio channel (obtains the CQIs in this case) in order to obtain the results of the measurements in the newly set long reporting cycle. When the time of the Frame_Offset information included in the message has elapsed since that message was received, the measurement results (the CQI information) are repeatedly reported to the master station by using the CQICH indicated in the message. This reporting is made at longer time intervals according to the Period information included in the message. Thereby, the quality of the radio channel is reported from the terminal device 30 to the master station in the newly set long cycle.

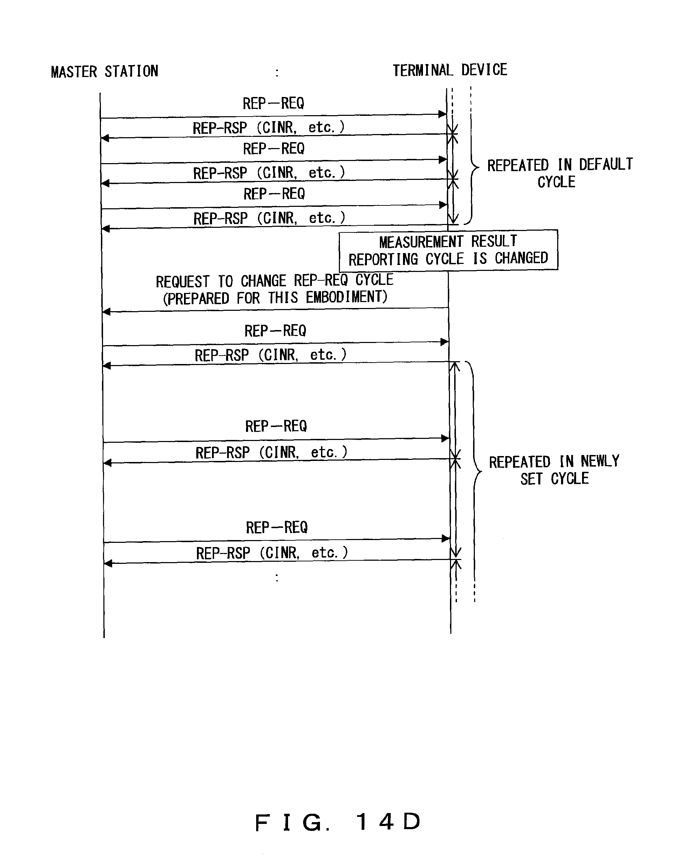

Fig. 14D shows the procedures for implementing the exchanges of the control messages in the communication system shown in Fig. 14C. In this system, the second example of the radio channel quality measurement process shown in Fig. 9 is executed.

In Fig. 14D, after the establishment of the connection between the master station and the terminal device 30, the master station repeatedly transmits to the terminal device 30 the above described REP-REQ message in a short reporting cycle, which is a default value. The transmission/reception unit 1 in the terminal device 30 measures the quality of the radio channel such as the CINR or the like in order to obtain the measurement results each time it receives this REP-REQ message, and returns an REP-RES message including the measurement result.

The master station receives the REP-RES message returned from the terminal device 30 in order to obtain the measurement result information of the radio channel quality included in the received REP-RES (S201 in Fig. 9) . In this example, the control unit 4 can recognize that the terminal device 30 is a mobile terminal device even when the identification unit 3 does not identify the attribute information (S202 in Fig. 7), because the terminal device 30 itself includes the identification unit 3.

The monitoring unit 2 in the terminal device 30 monitors the measurement results of the quality of the radio channel (S203 in Fig. 9). It is assumed that the results of the monitoring up to the current moment indicate that the degree of variation in the quality of the radio channel is lower than the threshold value. This fact and the fact that the terminal device 30 is a mobile terminal device cause the control unit 4 to determine that the reporting cycle needs to be changed (the determination result in S204 in Fig. 9 is "change needed") . In this case, the control unit 4 changes the cycle of reporting the quality of the radio channel to a longer cycle (S205 in Fig. 9). Thereafter, the control unit 4 causes the transmission/reception unit 1 to transmit a control message that requests a change in the cycle of reporting the quality of the radio channel (S206 in Fig. 9) . In addition, this control message is not defined by the WiMAX standard, but is one prepared for the present embodiment.

Having received this control message, the master station repeatedly transmits to the terminal device 30 a REP-REQ message in the newly set long reporting cycle included in the received control message. Thereafter, the transmission/reception unit 1 in the terminal device 30 measures the radio channel quality, such as the CINR or the like, each time it receives the REP-REQ message in order to obtain the results of the measurements and returns the REP-RES messages including the measurement results. Thereby, the quality of the radio channel is reported (the REP-RES messages are transmitted) from the terminal device 30 to the master station in the newly set long cycle.

Next, an example in which the quality of the radio channel is managed according to the present invention by using the Periodic_Ranging message sequence in the WiMAX standard will be explained.

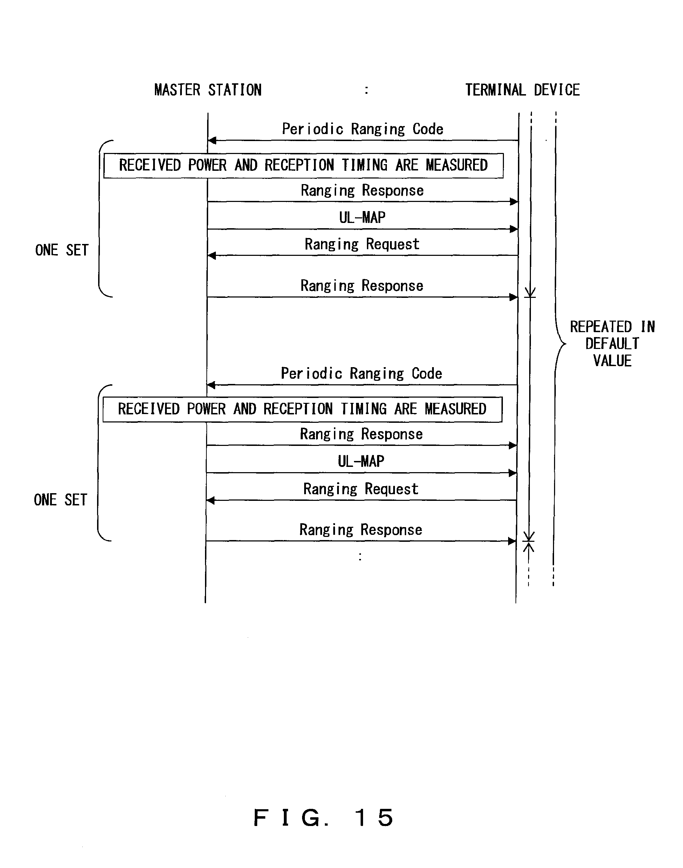

First, the Periodic_Ranging message sequence will be explained by referring to Fig. 15. The Periodic_Ranging message sequence refers to the procedures followed periodically at prescribed time intervals in order to exchange a series of control messages for the purpose of synchronizing the operations of the terminal device 30 with those of the master station.

In Fig. 15, the expression "one set" is used to describe the above series of control messages. The procedures for exchanging one set of the control message will be explained.

First, the terminal device 30 transmits to the master station the Periodic_Ranging_Code by using a data transmission path for a communication based on a contention method in an uplink communication path. This code is used for recognizing the terminal device 30 on which the ranging is to be performed.

The master station measures the received power of the signal including the Ranging_Request transmitted from the terminal device 30. The master station also measures the reception timing. When these values, which represent the quality of the radio channel established between the master station and the terminal device 30, are measured completely, the master station transmits to the terminal device 30 a Ranging_Response message that includes control information used for compensating for the gap between the result of the above measurements and the values that the master station requests of the terminal device 30 for the transmission power and the transmission timing.

Having received this Ranging Response message, the terminal device 30 adjusts the transmission power and the transmission timing of itself in accordance with the control information included in the received Ranging_Response message.

Next, the master station transmits a UL-MAP to the terminal device 30. The terminal device 30, having received the UL-MAP, immediately transmits a Ranging_Request to the master station by using the data transmission path designated in this UL-MAP. The Ranging_Request includes information such as the MAC address of the terminal device 30 and the like, and is transmitted to the master station. In response to this Ranging_Request, the master station transmits a Ranging_Response message to the terminal device 30.

Thereby, the synchronization between the terminal device 30 and the master station is maintained.

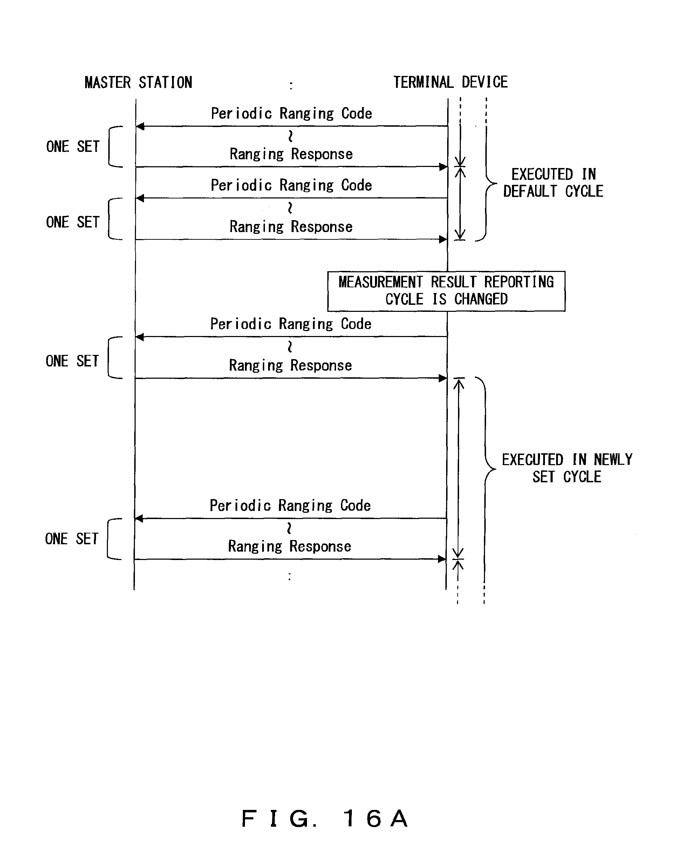

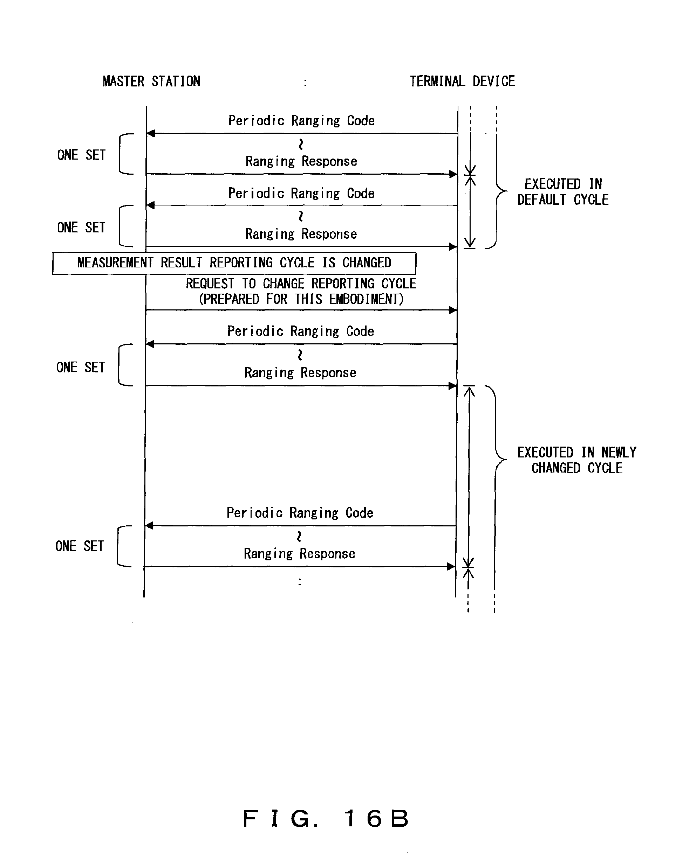

Figs. 16A and 16B will be explained. These figures respectively show the progress in the Periodic_Ranging message sequence between the master station (the base station 10 and the control station 20) and the terminal device 30, which are performing wireless communications according to WiMAX. The expression "one set" in these figures is used to express the exchanging procedures of one set of control messages shown in Fig. 15.

In the examples shown in Figs. 16A and 16B, the terminal device 30 is assumed to be a mobile terminal device. Accordingly, in these examples, the process in S103 is executed in the radio-channel quality reporting-cycle default-value determination process shown in Fig. 5, resulting in the default value for a cycle of reporting the quality of the radio channel (the cycle of executing the Periodic_Ranging message sequence) being set to be a short cycle.

Fig. 16A shows the progress in the Periodic_Ranging message sequence in the communication system shown in Fig. 2C. In this system, the first example of the radio channel quality measurement process shown in Fig. 7 is executed.

In Fig. 16A, the transmission/reception unit 1 in the terminal device 30 repeatedly executes the Periodic_Ranging message sequence in order to receive the above described control information in a short cycle, which is a default value (S201 in Fig. 7). In this example, the control unit 4 can recognize that the terminal device 30 is a mobile terminal device even when the identification unit 3 does not identify the attribute information (S202 in Fig. 7) because the terminal device 30 itself includes the identification unit 3.

The monitoring unit 2 in the terminal device 30 monitors the measurement results of the quality of the radio channel (S203 in Fig. 7). It is assumed that the results of the monitoring up to the current moment indicate that the degree of variation in the quality of the radio channel (in this case, the amount of compensation for the gap, indicated in control information, between the values requested as the reception power and the transmission power and the results of the actual measurements of these factors) is smaller than the threshold value. This fact and the fact that the terminal device 30 is a mobile terminal device cause the control unit 4 to determine that the cycle of the execution of the Periodic_Ranging message sequence needs to be changed (the determination result in S204 in Fig. 7 is "change needed"). In this case, the control unit 4 changes the execution cycle to a longer cycle (S205 in Fig. 7).

Thereafter, the transmission/reception unit 1 repeatedly executes the Periodic_Ranging message sequence in the newly set long execution cycle. Thereby, the quality of the radio channel is transmitted from the terminal device 30 to the master station in the newly set long reporting cycle.

Fig. 16B shows the progress in the Periodic_Ranging message sequence in the communication systems shown in Figs. 4A and 4B. In these systems, the second example of the radio channel quality measurement process shown in Fig. 9 is executed.

In Fig. 16B, the terminal device 30 repeatedly executes the Periodic_Ranging message sequence in a long cycle, which is a default value, and receives the above control information. Upon each of the repeated executions of this sequence, the master station measures the reception power of the signal including Ranging_Request transmitted from the terminal device 30 and the reception timing of this signal in order to obtain the result of the measurement of the radio channel quality (S201 in Fig. 9) . Also, at this time, the identification unit 3 identifies the attribute information transmitted from the terminal device 30 using another data transmission path that is designated in the UL-MAP, and recognizes that the terminal device 30 is a mobile terminal device (S202 in Fig. 9).

The monitoring unit 2 in the master station monitors the measurement results of the quality of the radio channel (S203 in Fig. 9). It is assumed that the results of the monitoring up to the current moment indicate that the degree of variation in the quality of the radio channel (in this case, the above described reception power and the reception timing) is lower than the threshold value. This fact and the fact that the terminal device 30 is a mobile terminal device cause the control unit 4 to determine that the cycle of the execution of the Periodic_Ranging message sequence needs to be changed (the determination result in S204 in Fig. 9 is "change needed") . In this case, the control unit 4 changes the execution cycle to a longer cycle (S205 in Fig. 9). Thereafter, the instruction unit 5 generates a control message including the newly set execution cycle, and causes the transmission/reception unit 1 to transmit the generated control message to the terminal device 30 (S206 in Fig. 9) . In addition, this control message is not defined by the WiMAX standard, but is prepared for the present embodiment.

Thereafter, the terminal device 30, having received that control message, repeatedly executes the Periodic_Ranging message sequence in the newly set long execution cycle included in the control message. Thereby, the quality of the radio channel is transmitted from the terminal device 30 to the master station in the newly set long reporting cycle.

Embodiments of the present invention have been explained above. However, the above embodiments are not intended to limit the scope of the present invention, and various alterations and modifications are allowed without departing from the spirit of the present invention.

## Claims

1. A master station in a wireless communication system performing wireless communications between the master station and a terminal device, comprising:
an identification unit for identifying attribute information representing an attribute of the terminal device or an attribute of a connection designated in a communication with the terminal device; and
a control unit for controlling, on the basis of a result of identifying the attribute information, determination of a reporting cycle in which management information is cyclically reported to the terminal device in order to manage a quality of a radio channel established between the master station and the terminal device.

2. The master station according to claim 1, further comprising:
a monitoring unit for monitoring the quality of the radio channel, wherein:
the control unit further controls determination of the reporting cycle on the basis of a result of monitoring the quality of the radio channel.

3. The master station according to claim 2, wherein:
the monitoring unit monitors, as the quality of the radio channel, at least one of a CQI (Channel Quality Indicator) of the radio channel, an RSSI (Received Signal Strength Indicator) of a signal transmitted from a communication partner with which the radio channel has been established, a precision in timing of receiving the signal, and a received power of the signal, all of which are transmitted from the terminal device.

4. The master station according to claim 2, wherein:
the monitoring unit monitors, as the quality of the radio channel, at least one of a CQI (Channel Quality Indicator) of the radio channel, an RSSI (Received Signal Strength Indicator) of a signal transmitted from a communication partner with which the radio channel has been established, a precision in timing of receiving the signal, and a received power of the signal, all of which are measured in the master station.

5. The master station according to claim 1, further comprising:
an instruction unit for notifying the terminal device of the reporting cycle determined under the control performed by the control unit.

6. The master station according to claim 1, wherein:
the attribute represented by the attribute information is an attribute for determining whether the terminal device is a fixed terminal device or a mobile terminal device.

7. The master station according to claim 1, wherein:
the attribute represented by the attribute information represents an amount of remaining power in the terminal device.

8. The master station according to claim 1, wherein:
the attribute represented by the attribute information represents a priority given to a communication with the terminal device or a priority given to a connection designated for a communication with the terminal device.

9. A terminal device in a wireless communication system performing wireless communications between a master station and the terminal device, comprising:
an identification unit for identifying attribute information representing an attribute of the terminal device or an attribute of a connection designated in a communication with the master station; and
a control unit for controlling, on the basis of a result of identifying the attribute information, determination of a reporting cycle in which management information is cyclically reported to the master station in order to manage a quality of a radio channel established between the master station and the terminal device.

10. The terminal device according to claim 9, further comprising:
a monitoring unit for monitoring the quality of the radio channel, wherein:
the control unit further controls determination of the reporting cycle on the basis of a result of monitoring the quality of the radio channel.

11. The terminal device according to claim 10, wherein:
the monitoring unit monitors, as the quality of the radio channel, at least one of a CQI (Channel Quality Indicator) of the radio channel, an RSSI (Received Signal Strength Indicator) of a signal transmitted from a communication partner with which the radio channel has been established, a precision in timing of receiving the signal, and a received power of the signal, all of which are transmitted from the master station.

12. The terminal device according to claim 10, wherein:
the monitoring unit monitors, as the quality of the radio channel, at least one of a CQI (Channel Quality Indicator) of the radio channel, an RSSI (Received Signal Strength Indicator) of a signal transmitted from a communication partner with which the radio channel has been established, a precision in timing of receiving the signal, and a received power of the signal, all of which are measured in the terminal device.

13. The terminal device according to claim 9, further comprising:
an instruction unit for notifying the master station of the reporting cycle determined under the control performed by the control unit.

14. The terminal device according to claim 9, wherein:
the attribute represented by the attribute information is an attribute for determining whether the terminal device is a fixed terminal device or a mobile terminal device.

15. The terminal device according to claim 9, wherein:
the attribute represented by the attribute information represents an amount of remaining power in the terminal device.

16. The terminal device according to claim 9, wherein:
the attribute represented by the attribute information represents a priority given to a communication with the master station or a priority given to a connection designated for a communication with the master station.

17. A method of managing a quality of a radio channel established between a master station and a terminal device in a wireless communication system performing wireless communications between the master station and the terminal device, comprising:
monitoring the quality of the radio channel;
identifying attribute information representing an attribute of the terminal device or an attribute of a connection designated in a communication between a master station and a terminal device; and
performing, on the basis of both a result of monitoring the quality of the radio channel and a result of identifying the attribute information, determination of a reporting cycle in which management information is cyclically reported to a partner in the communication in order to manage the quality of the radio channel.

18. The method of managing a quality of a radio channel according to claim 17, wherein:
the attribute represented by the attribute information is an attribute for determining whether the terminal device is a fixed terminal device or a mobile terminal device;
when an identification result indicating that the terminal device is a mobile terminal device is obtained, determination of the reporting cycle is performed so that the reporting cycle is made to be shorter than a reporting cycle that is set when an identification result indicating that the terminal device is a fixed terminal device is obtained;
when a monitoring result indicating that a variation in the quality of the radio channel is greater than a prescribed determination threshold value is obtained in a case in which an identification result indicating that the terminal device is a fixed terminal device has been obtained, determination is performed so that the reporting cycle is made shorter; and
when a monitoring result indicating that a variation in the quality of the radio channel is smaller than the prescribed determination threshold value is obtained in a case in which an identification result indicating that the terminal device is a mobile terminal has been obtained, determination is performed so that the reporting cycle is made longer.

19. The method of managing a quality of a radio channel according to claim 17, wherein:
the attribute represented by the attribute information represents an amount of remaining power in the terminal device;
when the amount of the remaining power in the terminal device identified through the identification of the attribute information is smaller than a prescribed threshold value, determination is performed so that the reporting cycle is made to be longer than a reporting cycle that is set when the amount of the remaining power in the terminal device is greater than the threshold value;
when a monitoring result indicating that a variation in the quality of the radio channel is greater than a prescribed determination threshold value is obtained in a case in which the amount of the remaining power in the terminal device identified through the identification of the attribute information is smaller than the threshold value, determination is performed so that the reporting cycle is made shorter; and
when a monitoring result indicating that a variation in the quality of the radio channel is smaller than the prescribed determination threshold value is obtained in a case in which the amount of the remaining power in the terminal device identified through the identification of the attribute information is greater than the threshold value, determination is performed so that the reporting cycle is made longer.

20. The method of managing a quality of a radio channel according to claim 17, wherein:
the attribute represented by the attribute information represents a priority given to a communication with the terminal device or a priority given to a connection designated for a communication with the terminal device;
when a priority identified through the identification of the attribute information is higher than a prescribed priority, determination is performed so that the reporting cycle is made to be shorter than a reporting cycle that is set when the priority identified through the identification of the attribute information is lower than the prescribed priority;
when a monitoring result indicating that a variation in the quality of the radio channel is greater than a prescribed threshold value is obtained in a case in which the priority identified through the identification of the attribute information is higher than a prescribed priority, determination is performed so that the reporting cycle is made shorter; and
when a monitoring result indicating that a variation in the quality of the radio channel is smaller than a prescribed threshold value is obtained, determination is performed so that the reporting cycle is made longer.
